(19) **Europäisches Patentamt / European Patent Office / Office européen des brevets**

(11) **EP 1 546 916 B1**

(12) **FASCICULE DE BREVET EUROPEEN**

(45) Date de publication et mention
de la délivrance du brevet:
**15.04.2020 Bulletin 2020/16**

(21) Numéro de dépôt: **03797357.5**

(22) Date de dépôt: **22.09.2003**

(51) Int Cl.:
**G06F 17/14** *(2006.01)*     **H04S 1/00** *(2006.01)*

(86) Numéro de dépôt international:
**PCT/FR2003/002784**

(87) Numéro de publication internationale:
**WO 2004/027642 (01.04.2004 Gazette 2004/14)**

(54) **PROCEDE ET SYSTEME DE TRAITEMENT D'UNE REPRESENTATION D'UN CHAMP ACOUSTIQUE**

VERFAHREN UND VORRICHTUNG ZUM VERARBEITEN EINER DARSTELLUNG EINES AKUSTISCHEN FELDES

METHOD AND SYSTEM FOR PROCESSING A SOUND FIELD REPRESENTATION

(84) Etats contractants désignés:
**AT BE BG CH CY CZ DE DK EE ES FI FR GB GR HU IE IT LI LU MC NL PT RO SE SI SK TR**

(30) Priorité: **23.09.2002 FR 0211739**

(43) Date de publication de la demande:
**29.06.2005 Bulletin 2005/26**

(73) Titulaire: **Trinnov Audio**
**94800 Villejuif (FR)**

(72) Inventeurs:
• **Bruno, Rémy**
  **94400 Vitry sur Sein (FR)**
• **Laborie, Arnaud**
  **94400 Vitry sur Seine (FR)**
• **Montoya, Sébastien**
  **75019 Paris (FR)**

(74) Mandataire: **Lavoix**
  **2, place d'Estienne d'Orves**
  **75441 Paris Cedex 09 (FR)**

(56) Documents cités:
• JASKULA MAREK: "New windows family based on modified Legendre polynomials" 19TH IEEE INSTRUMENTATION AND MEASUREMENT TECHNOLOGY CONFERENCE;ANCHORAGE, AK, UNITED STATES MAY 21-23 2002, vol. 1, 21 mai 2002 (2002-05-21), pages 553-556, XP002248109 Conf Rec IEEE Instrum Meas Technol Conf;Conference Record - IEEE Instrumentation and Measurement Technology Conference 2002
• FOX P D ET AL: "Modeling of CW annular arrays using limited diffraction Bessel beams" IEEE TRANSACTIONS ON ULTRASONICS, FERROELECTRICS AND FREQUENCY CONTROL, JAN. 2002, IEEE, USA, vol. 49, no. 1, janvier 2002 (2002-01), pages 85-93, XP002248110 ISSN: 0885-3010
• GUMEROV N A ET AL: "Modeling the effect of a nearby boundary on the HRTF" 2001 IEEE INTERNATIONAL CONFERENCE ON ACOUSTICS, SPEECH, AND SIGNAL PROCESSING. PROCEEDINGS (CAT. NO.01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, 7 mai 2001 (2001-05-07), pages 3337-3340, XP002248111 2001, Piscataway, NJ, USA, IEEE, USA ISBN: 0-7803-7041-4

EP 1 546 916 B1

**Description**

La présente invention concerne un procédé et un système de traitement d'une représentation d'un champ acoustique afin de délivrer une représentation de ce champ acoustique modifiée par un traitement au moins spatial.

Actuellement, il existe des procédés et des systèmes qui, à partir d'une représentation d'un champ acoustique sous la forme de coefficients en fonction du temps et de l'espace, permettent de délivrer une représentation modifiée de ces coefficients par des combinaisons linéaires correspondant à un traitement au moins spatial du champ acoustique.

Cependant, les traitements possibles sont limités et dans tous les cas prédéterminés.

Par exemple, les systèmes regroupés sous le terme ambisonic utilisent une représentation d'un environnement sonore sous la forme d'une distribution angulaire de sources virtuelles autour d'un point assimilé à la position d'écoute.

Ces systèmes ne permettent d'effectuer que certaines modifications prédéterminées telles qu'une distorsion angulaire sur l'azimut, une focalisation dans une direction privilégiée, ou une rotation par rapport à un axe donné.

De plus, ces systèmes sont limités au niveau de leur précision. Ainsi, dans les systèmes existants, des traitements tels que la focalisation dans une direction quelconque ne peuvent être appliqués qu'à des représentations limitées à un niveau de précision correspondant au premier ordre mathématique, c'est-à-dire de faible qualité.

Il apparaît donc qu'aucun des systèmes de l'art antérieur ne permet d'effectuer une modification quelconque d'une représentation d'un champ acoustique afin d'obtenir une représentation modifiée, notamment dans le cas d'une représentation initiale de qualité, d'ordre élevé par exemple.

Le but de l'invention est de remédier à ce problème en fournissant un procédé et un système de traitement de la représentation d'un champ acoustique permettant d'effectuer des traitements quelconques, présentant une très large diversité.

L'invention a pour objet un procédé de détermination de combinaisons de filtrage d'un traitement spatial selon la revendication 1.

Suivant d'autres caractéristiques de l'invention, le procédé de détermination est selon les revendications dépendantes 2 à 6.

L'invention a également pour objet un procédé de détermination d'une combinaison de traitements spatiaux à un champ acoustique initial selon la revendication 7.

Suivant une autre caractéristique de l'invention, le procédé de détermination est selon la revendication dépendante 8.

L'invention a également pour objet un dispositif de détermination de combinaisons de filtrage d'un traitement spatial selon la revendication 9.

L'invention sera mieux comprise à la lecture de la description qui va suivre donnée uniquement à titre d'exemple, et faite en se référant aux dessins annexés sur lesquels :

- la Fig. 1 est une représentation d'un repère sphérique ;
- la Fig. 2 est un organigramme général du procédé de l'invention ;
- la Fig. 3 est un organigramme détaillé d'un premier mode de réalisation de l'invention ;
- la Fig. 4 est un schéma d'un mode de réalisation de l'étape d'application du traitement ;
- la Fig. 5 est un organigramme détaillé d'un second mode de réalisation de l'invention ; et
- la Fig. 6 est un schéma synoptique d'un dispositif adapté pour la mise en œuvre du procédé de l'invention.

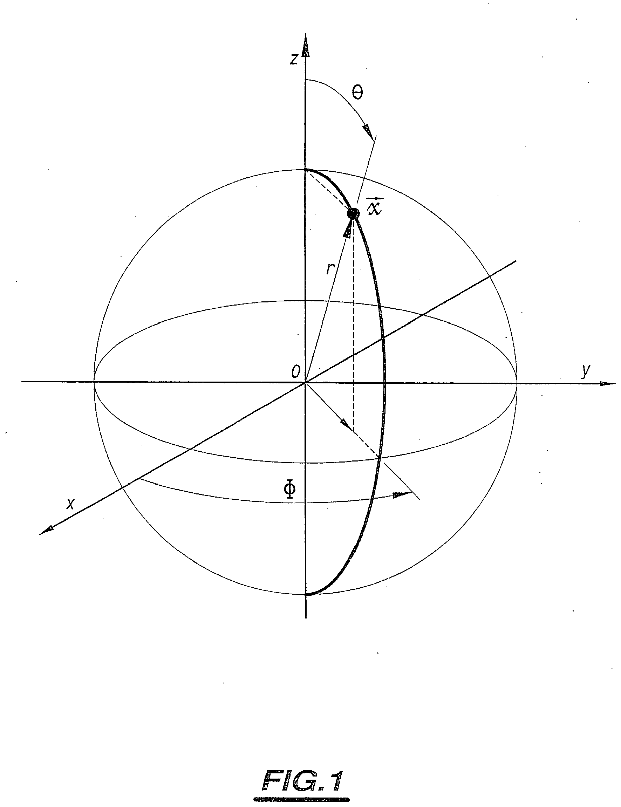

Sur la figure 1, on a représenté un repère sphérique classique, de manière à préciser le système de coordonnées auquel il est fait référence dans le texte.

Ce repère est un repère orthonormal, d'origine **O,** et comporte trois axes (OX), (OY) et (OZ).

Dans ce repère, une position notée $\vec{x}$ est décrite au moyen de ses coordonnées sphériques $(r, \theta, \Phi)$, où $r$ désigne la distance par rapport à l'origine O, $\theta$ l'orientation dans le plan vertical et $\Phi$ l'orientation dans le plan horizontal.

Dans un tel repère, un champ acoustique est connu si l'on définit en tout point à chaque instant $t$ la pression acoustique notée $p(r, \theta, \phi, t)$, dont la transformée de Fourier est notée P $(r, \theta, \phi, f)$ où $f$ désigne la fréquence.

Le procédé de l'invention se base sur l'utilisation de fonctions spatio-temporelles permettant de décrire un champ acoustique quelconque dans le temps et dans les trois dimensions de l'espace.

Dans les modes de réalisation décrits, ces fonctions sont des fonctions dites de Fourier-Bessel sphériques de première espèce, appelées par la suite fonctions de Fourier-Bessel.

Dans une zone vide de sources et vide d'obstacles, les fonctions de Fourier-Bessel correspondent aux solutions de l'équation des ondes et constituent une base qui engendre tous les champs acoustiques produits par des sources situées à l'extérieur de cette zone.

Tout champ acoustique tridimensionnel peut donc s'exprimer par une combinaison linéaire des fonctions de Fourier-Bessel, selon l'expression suivante :

$$P(r,\theta,\phi,f)=4\,\pi\sum_{l=0}^{\infty}\sum_{m=-l}^{l}P_{l,m}(f)j^{l}\,j_{l}(kr)y_{l}^{m}(\theta,\phi)$$

Dans cette équation, les termes $P_{l,m}$ (f) sont définis comme les coefficients de Fourier-Bessel du champ p (r, $\theta$, $\phi$, t), $k=\dfrac{2\pi f}{c}$, c est la célérité du son dans l'air (340 ms⁻¹), $j_{l}(kr)$ est la fonction de Bessel sphérique de première espèce d'ordre l définie par $j_{l}(x)=\sqrt{\dfrac{\pi}{2x}}\,J_{l+1/2}(x)$ où $J_{v}(x)$ est la fonction de Bessel de première espèce d'ordre v, et $y_{l}^{m}(\theta,\phi)$ est l'harmonique sphérique réelle d'ordre l et de terme m, avec m allant de -l à l, définie par :

$$y_{l}^{m}(\theta,\phi)=P_{l}^{|m|}(\cos\theta)\,\mathrm{trg}_{m}(\phi)$$

avec :

$$\mathrm{trg}_{m}(\phi)=\begin{cases}\dfrac{1}{\sqrt{\pi}}\cos(m\,\phi) & \text{pour } m>0\\[2mm]\dfrac{1}{\sqrt{2\pi}} & \text{pour } m=0\\[2mm]\dfrac{1}{\sqrt{\pi}}\sin(m\,\phi) & \text{pour } m<0\end{cases}$$

Dans cette équation, les $P_{l}^{m}(x)$ sont les fonctions de Legendre associées définies par:

$$P_{l}^{m}(x)=\sqrt{\frac{2l+1}{2}}\sqrt{\frac{(l-m)!}{(l+m)!}}\,(1-x^{2})^{m/2}\frac{\mathrm{d}^{m}}{\mathrm{d}x^{m}}P_{l}(x)$$

avec $P_{l}^{m}(x)$ désignant les polynômes de Legendre, définis par :

$$P_{l}(x)=\frac{1}{2^{l}l!}\frac{\mathrm{d}^{l}}{\mathrm{d}x^{l}}(x^{2}-1)^{l}.$$

Les coefficients de Fourier-Bessel s'expriment aussi dans le domaine temporel par les coefficients $p_{l,m}$ (t) correspondant à la transformée de Fourier temporelle inverse des coefficients de Fourier-Bessel $P_{l,m}$ (f).

Dans d'autres modes de réalisation, le champ acoustique est décomposé sur une base de fonctions, où chacune des fonctions s'exprime par une combinaison linéaire, éventuellement infinies de fonctions de Fourier-Bessel.

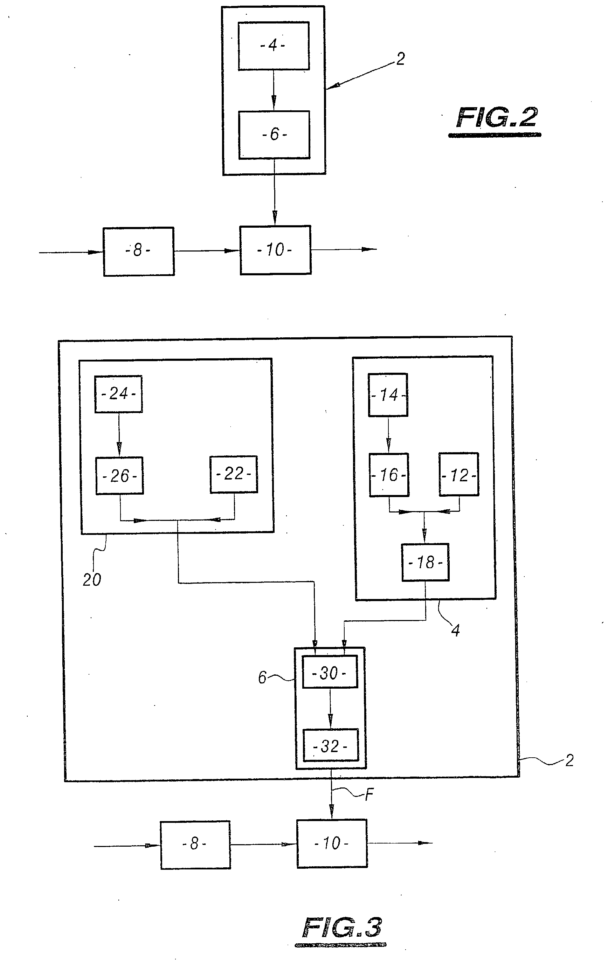

Sur la figure 2, on a représenté un organigramme général du procédé de l'invention.

De manière générale, le procédé débute par une étape 2 de définition d'un traitement à appliquer à une représentation d'un champ acoustique et correspondant à un traitement au moins spatial de ce champ acoustique.

Cette étape 2 de définition du traitement comporte une étape 4 d'établissement d'un ensemble de fonctions de directivité représentatif du traitement.

On entend par fonction de directivité une fonction, notée G($\theta$, $\Phi$, f), qui associe une valeur réelle ou complexe, éventuellement fonction de la fréquence, ou d'une plage de fréquences, à chaque direction de l'espace.

Toute fonction de directivité G($\theta$, $\Phi$, f) se décompose en coefficients d'harmoniques sphériques, notés $G_{l,m}(f)$ par transformée de Fourier sphérique.

Ainsi, la fonction de directivité G($\theta$, $\Phi$, f) s'obtient à partir des coefficients de Fourier sphérique $G_{l,m}(f)$ par transformée de Fourier sphérique inverse, selon l'expression :

$$G(\theta,\phi,f)=\sum_{l=0}^{\infty}\sum_{m=-l}^{l}G_{l,m}(f)\,y_l^m(\theta,\phi)$$

Dans le reste du document, les fonctions de directivité peuvent être désignées par leur expression $G(\theta, \Phi, f)$ dans l'espace direct ou sous forme de coefficients de Fourier sphérique $G_{l,m}(f)$.

Cet ensemble de fonctions de directivité est délivré à l'issue de l'étape 4 sous la forme d'un ensemble de coefficients correspondant à la décomposition des fonctions de directivité sur une base d'harmoniques sphériques.

Par la suite, une étape 6 de détermination de combinaisons de filtrage est réalisée à partir de la décomposition des fonctions de directivité réalisée à l'étape 4. La notion de filtrage recouvre le filtrage fréquentiel, d'amplitude, de phase ou leur combinaison.

Ainsi, l'étape 6 de détermination de combinaison de filtrage délivre des combinaisons de filtrage correspondant au traitement à appliquer sous la forme de paramètres de filtres permettant ultérieurement de mettre en œuvre ces combinaisons de filtrage à l'aide par exemple d'un ensemble de filtres numériques.

En vue de l'application du traitement, le procédé comporte une étape 8 d'établissement d'une représentation initiale du champ acoustique sous la forme d'un ensemble de coefficients ou signaux représentatif de ce champ dans le temps et dans les trois dimensions de l'espace.

Notamment, cet ensemble de coefficients est un ensemble de coefficients dit de « Fourier-Bessel » tels que définis en référence à la figure 1.

Le procédé comporte ensuite une étape 10 d'application des combinaisons de filtrage, définies lors de l'étape 2 de définition, aux coefficients de la représentation initiale tels que définis lors de l'étape 8.

Cette étape 10 permet d'obtenir une représentation modifiée correspondant à une représentation dans le temps et dans les trois dimensions de l'espace du champ acoustique initial modifié par le traitement défini, sous la forme d'un ensemble de coefficients dits de Fourier-Bessel.

Sur la figure 3, on a représenté en détail l'organigramme d'un premier mode de réalisation de l'invention.

Dans ce mode de réalisation, les traitements appliqués sont des traitements tels que le fenêtrage spatial consistant à modifier le gain de tout ou partie des sources virtuelles dont on considère qu'elles génèrent le champ acoustique initial, et la convolution spatiale ou filtrage spatial, consistant à modifier l'étalement angulaire de tout ou partie de ces sources virtuelles, ou tout autre traitement analogue.

Ces traitements de fenêtrage et convolution peuvent varier avec la fréquence, ce qui permet d'effectuer des modifications d'éloignement et de spectre de tout ou partie de ces sources virtuelles.

Ainsi que cela a été décrit à la figure 2, le procédé débute par une étape 4 de détermination d'un ensemble de fonctions de directivité représentatif du traitement à appliquer.

Dans le cas où le traitement ne comporte qu'un seul traitement tel qu'un traitement de fenêtrage ou de convolution, une seule fonction de directivité, éventuellement variant avec la fréquence, suffit à le représenter.

Avantageusement, l'étape 4 comporte une sous-étape 12 de détermination directe de tout ou partie de cet ensemble de fonctions de directivité dans l'un ou l'autre d'une pluralité de formats prédéterminés.

En outre ou alternativement, l'étape 4 comporte une sous-étape 14 d'entrée d'une consigne de traitement, laquelle est interprétée automatiquement lors d'une sous-étape 16 d'interprétation permettant de délivrer automatiquement tout ou partie dudit ensemble de fonctions de directivité dans l'un ou l'autre d'une pluralité de formats prédéterminés. Par exemple, le traitement est mis en œuvre par des moyens logiciels sur un ordinateur et cette consigne de traitement à la forme d'une icône dont la validation entraîne l'exécution par les moyens logiciels d'un traitement donné.

Les sous-étapes 12 et 14 correspondent par exemple à une saisie manuelle ou encore à la réception de données de directivité provenant d'une mémoire interne ou d'un dispositif externe.

En fonction du format dans lequel est déterminé ledit ensemble de fonctions de directivité, l'étape 4 peut requérir une sous-étape 18 de conversion de l'ensemble de fonctions de directivité à partir d'un format prédéterminé en un ensemble de coefficients correspondant à la décomposition des fonctions de directivité sur une base d'harmoniques sphériques.

Pour chaque fonction de directivité $G_{l,m}(f)$ de l'ensemble de fonctions de directivité, cette sous-étape 18 de conversion peut être réalisée de plusieurs manières.

Par exemple, la fonction de directivité $G_{l,m}(f)$ est définie à partir de paramètres $(r_q, \theta_q, \phi_q)$ spécifiant la position de $Q$ sources virtuelles et de paramètres $H_q(f)$ spécifiant la réponse en fréquence de chacune de ces sources. A chaque source virtuelle est associé un modèle de rayonnement de sorte que l'ensemble de ces sources est supposé produire un champ acoustique dont la représentation en coefficients de Fourier-Bessel permet d'associer à ce champ, une fonction de directivité.

Par exemple, le modèle de rayonnement associé à chaque source est un modèle de rayonnement en ondes sphériques et la fonction de directivité $G_{l,m}(f)$ est obtenue lors de la sous-étape 18 grâce aux équations suivantes :

$$G_{l,m}(f) = \sum_{q=1}^{Q} \frac{H_q(f)}{r_q} e^{-\frac{j2\pi r_q f}{c}} \xi_l(r_q, f) \, y_l^m(\theta_q, \phi_q)$$

avec

$$\xi_l(r_q, f) = \sum_{k=0}^{l} \frac{(l+k)!}{2^k \, k! \, (l-k)!} \left( \frac{j2\pi r_q f}{c} \right)^{-k}$$

En variante, ce calcul est réalisé à partir de paramètres $(\theta_q, \phi_q)$ spécifiant les directions des $Q$ sources. Dans ce cas, un modèle de rayonnement en ondes planes est associé à chaque source et la fonction de directivité $G_{l,m}(f)$ est obtenue grâce à l'équation suivante :

$$G_{l,m}(f) = \sum_{q=1}^{Q} H_q(f) \, y_l^m(\theta_q, \phi_q)$$

Dans d'autres modes de réalisation, $G_{l,m}(f)$ est déterminé à partir d'une combinaison de modèles de rayonnement en ondes planes et en ondes sphériques.

Dans un autre cas, la fonction de directivité est définie à partir de paramètres représentatifs d'une description paramétrique d'une fonction de directivité. Cette description s'effectue dans l'espace direct et associe à chaque direction une valeur pouvant être complexe. Avantageusement, les paramètres peuvent varier avec la fréquence.

Dans ce cas, les coefficients de la fonction de directivité $G_{l,m}(f)$ sont déterminés par la mise en œuvre d'un modèle paramétrique. Les paramètres du modèle sont placés dans un vecteur $\vec{\gamma}(f)$ et le modèle paramétrique de la fonction de directivité s'écrit $G(\theta, \phi, \vec{\gamma}(f))$. Les coefficients de la fonction de directivité $G_{l,m}(f)$ s'obtiennent par transformée de Fourier sphérique de $G(\theta, \phi, \vec{\gamma}(f))$ selon l'équation :

$$G_{l,m}(f) = \int_{\theta=0}^{\pi} \int_{\phi=0}^{2\pi} G(\theta, \phi, \vec{\gamma}(f)) \, y_l^m(\theta, \phi) \, \sin\theta \, d\theta \, d\phi$$

Par exemple, le modèle paramétrique peut correspondre à une fonction de directivité présentant un unique lobe. Ce modèle est contrôlé par les paramètres $(\theta_l(f), \phi_l(f))$ spécifiant la direction du lobe et le paramètre $\theta_0(f)$ spécifiant l'angle d'ouverture du lobe.

Ainsi, le modèle paramétrique peut être une fonction de directivité valant 0 pour les directions quelconques et valant 1 pour chaque direction $(\theta, \phi)$ vérifiant la relation suivante :

$$(\theta_l(f), \phi_l(f)) \cdot (\theta, \phi) > \cos(\theta_0(f))$$

où $(\theta_l(f), \phi_l(f)) \cdot (\theta, \phi)$ désigne le produit scalaire entre les directions $(\theta_l(f), \phi_l(f))$ et $(\theta, \phi)$.

Dans ce cas les coefficients $G_{l,m}(f)$ de la fonction de directivité sont donnés par :

$$G_{l,m}(f) = 2\pi \, y_l^m(\theta_l(f), \phi_l(f)) \frac{P_{l-1}(\cos\theta_0(f)) - P_{l+1}(\cos\theta_0(f))}{2l+1}$$

Dans cette expression $P_{-1}(x) = 1$

En variante, les paramètres de la description paramétrique de la fonction de directivité peuvent varier avec le temps. Dans ce cas, les paramètres du modèle sont placés dans un vecteur $\vec{\gamma}(t)$ et le modèle paramétrique de la fonction de directivité s'écrit $g(\theta, \phi, \vec{\gamma}(t))$. Les coefficients de la fonction de directivité $g_{l,m}(t)$ exprimés dans le domaine temporel s'obtiennent alors par transformée de Fourier sphérique de $g(\theta, \phi, \vec{\gamma}(t))$ selon l'expression :

$$g_{l,m}(t) = \int_{\theta=0}^{\pi} \int_{\phi=0}^{2\pi} g\big(\theta,\phi,\vec{\gamma}(t)\big)\, y_l^m(\theta,\phi)\, \sin\theta\, d\theta\, d\phi$$

Les coefficients $G_{l,m}(f)$ de la fonction de directivité exprimés dans le domaine fréquentiel s'obtiennent alors par transformée de Fourier temporelle des coefficients $g_{l,m}(t)$.

Dans encore un autre cas, la fonction de directivité est définie sous la forme d'une liste de $Q$ échantillons. La liste est formée de $Q$ couples $\{((\theta_q,\phi_q), v_q)\}$ où $(\theta_q,\phi_q)$ est la direction de l'échantillon $q$ et où $v_q$ est la valeur de la fonction de directivité dans la direction $(\theta_q,\phi_q)$. Avantageusement, la liste d'échantillons peut être saisie pour une pluralité de fréquences $f$ et est alors notée $\{((\theta_q,\phi_q), v_q)\}(f)$.

Pour chaque Fréquence $f$ de fonctionnement, les coefficients $G_{l,m}(f)$ de la fonction de directivité sont déduits de la liste d'échantillons $\{((\theta_q,\phi_q),v_q)\}$ $(f)$. Ces coefficients sont obtenus par inversion du processus d'échantillonnage angulaire qui permet de déduire les échantillons de la liste $\{((\theta_q,\phi_q), v_q)\}$ $(f)$ à partir d'une fonction de directivité fournie sous forme de coefficients d'harmoniques sphériques. Cette inversion peut prendre différentes formes afin de contrôler l'interpolation entre les échantillons.

Dans le mode de réalisation décrit, les échantillons sont placés dans un vecteur $V$ de la façon suivante.

$$\begin{bmatrix} v_1 \; v_2 \cdots v_q \end{bmatrix}^t$$

Une matrice $Y$ est constituée à partir des directions d'échantillonnage de la façon suivante :

$$\begin{bmatrix} Y_{1,0,0} \; Y_{1,1,-1} \; Y_{1,1,0} \; Y_{1,1,1} \cdots Y_{1,L,-L} \cdots Y_{1,L,0} \cdots Y_{1,L,L} \\ Y_{2,0,0} \; Y_{2,1,-1} \; Y_{2,1,0} \; Y_{2,1,1} \cdots Y_{2,L,-L} \cdots Y_{2,L,0} \cdots Y_{2,L,L} \\ \vdots \qquad \vdots \qquad \vdots \qquad \vdots \qquad\quad \vdots \qquad\quad \vdots \qquad\quad \vdots \\ Y_{Q,0,0} Y_{Q,1,-1} Y_{Q,1,0} Y_{Q,1,1} \cdots Y_{Q,L,-L} \cdots Y_{Q,L,0} \cdots Y_{Q,L,L} \end{bmatrix}$$

où chaque élément $Y_{q,l,m}$ est égal à :

$$Y_{q,l,m} = y_l^m(\theta_q,\phi_q)$$

On rappelle que $Y_m^l(\theta_q,\phi_q)$ désigne l'harmonique sphérique d'ordre $l$ et de terme $m$ pour la direction d'échantillonnage $\theta_q$, $\phi_q$ considérée.

On détermine un vecteur $G$ contenant les coefficients $G_{l,m}(f)$ pour la fréquence $f$. Le vecteur $G$ peut être déterminé au moyen des relations suivantes :

- si le nombre $Q$ d'échantillons à la fréquence $f$ est supérieur au nombre de coefficients $G_{l,m}(f)$ :

$$G = (Y^t Y)^{-1} Y^t V;$$

et
- si le nombre $Q$ d'échantillons à la fréquence $f$ est inférieur au nombre de coefficients $G_{l,m}(f)$ :

$$G = Y^t (Y Y^t)^{-1} V.$$

Dans le vecteur $G$, les coefficients $G_{l,m}(f)$ sont organisés de la manière suivante :

$$\begin{bmatrix} G_{0,0}(f) & G_{1,-1}(f) & G_{1,0}(f) & G_{1,1}(f) & \cdots & G_{L,-L}(f) & \cdots & G_{L,0}(f) & \cdots & G_{L,L}(f) \end{bmatrix}'$$

En variante, la liste d'échantillons peut être saisie pour une pluralité d'instants $t$ et est alors notée $\{((\theta_q, \phi_q), v_q)\}(t)$.

Pour chaque instant $t$ saisi, les coefficients $g_{l,m}(t)$ de la fonction de directivité exprimés dans le domaine temporel sont déduits de la liste d'échantillons $\{((\theta_q, \phi_q), v_q)\}(t)$. Ces coefficients sont obtenus par inversion du processus d'échantillonnage angulaire qui permet de déduire les échantillons de la liste $\{((\theta_q, \phi_q), v_q)\}(t)$ à partir d'une fonction de directivité fournie sous forme de coefficients d'harmoniques sphériques.

Les coefficients $G_{l,m}(f)$ de la fonction de directivité exprimés dans le domaine fréquentiel s'obtiennent alors par transformée de Fourier temporelle des coefficients $g_{l,m}(t)$.

Bien entendu, dans le cas où les étapes 12 ou 16 délivrent directement la fonction de directivité sous la forme de coefficients correspondant à la décomposition de cette fonction sur une base d'harmoniques sphériques, la sous-étape 18 de conversion ne la modifie pas.

Ainsi, à l'issue de l'étape 4, un ensemble de fonctions de directivité représentatif du traitement à appliquer est délivré sous la forme d'un ensemble de coefficients correspondant à la décomposition de ces fonctions sur une base d'harmoniques sphériques.

Par ailleurs, l'étape 2 de définition du traitement comporte également une étape 20 d'établissement d'un ensemble de paramètres du traitement.

De même que dans le cas de l'étape 4, cet ensemble de paramètres peut être déterminé directement lors d'une sous-étape 22 de détermination directe et/ou à la suite d'une sous-étape 24 d'entrée d'une consigne de traitement et d'une sous-étape 26 d'interprétation de cette consigne de traitement permettant de délivrer automatiquement tout ou partie de l'ensemble de paramètres.

Les sous-étapes 22 et 24 correspondent par exemple à une saisie manuelle de certains paramètres ou encore à la réception de données de paramètres à partir d'une mémoire interne ou d'un dispositif externe.

Notamment, lors de l'étape 20 d'établissement d'un ensemble de paramètres, tout ou partie des paramètres suivants sont définis :

- un paramètre L spécifiant l'ordre limite de fonctionnement du procédé et correspondant à la limite mathématique de précision souhaitée ; et

- un ensemble de constantes notées $c_{l,m,l'',m''}^{l',m'}$ formant des coefficients de pondération définis en fonction de la nature du traitement. En particulier, ces coefficients sont avantageusement appliqués aux fonctions de directivité pour obtenir les combinaisons de filtrage précitées.

Certains paramètres peuvent être invariant et être directement intégrés dans le procédé.

Le paramètre $L$ permet au procédé de s'adapter au niveau de précision de la représentation initiale et permet notamment au procédé, objet de l'invention, d'appliquer un traitement à une représentation initiale présentant un haut niveau de précision.

Ainsi que cela a été décrit précédemment, les constantes $c_{l,m,l'',m''}^{l',m'}$ peuvent être déterminées directement lors de l'étape 20 par un opérateur, à partir d'une mémoire ou d'un dispositif interne. Par exemple, elles sont toutes calculées préalablement, stockées dans une mémoire et sélectionnées en fonction de la nature du traitement.

Alternativement, une consigne définissant la nature du traitement est saisie lors de la sous-étape 24 et la sous-étape 26 correspond au calcul de tout ou partie de cet ensemble de constantes en fonction de la nature du traitement et à partir de relations décrites ultérieurement dans le texte.

Bien entendu, les constantes $c_{l,m,l'',m''}^{l',m'}$ peuvent être déterminées à l'aide d'une combinaison des solutions décrites.

Les paramètres établis lors de l'étape 20, ainsi que les coefficients correspondants aux fonctions de directivité établis lors de l'étape 4, sont utilisés lors de l'étape 6 de détermination des combinaisons de filtrage.

Cette étape 6 de détermination comporte une sous-étape 30 de calcul de combinaisons de filtrage par des combinaisons linéaires des coefficients correspondants à la décomposition sur une base d'harmoniques sphériques de l'ensemble de fonctions de directivité représentatif du traitement.

Lors de cette première sous-étape 30 de calcul, des combinaisons de filtrage, notées $C_{l,m}^{l',m'}(f)$, sont déterminées à partir des fonctions de directivité $G_{l,m}(f)$ et des constantes $c_{l,m,l'',m''}^{l',m'}$ déterminés en fonction de la nature du

EP 1 546 916 B1

traitement et formant des coefficients de pondération des combinaisons linéaires. Les combinaisons de filtrage sont alors déterminées de la façon suivante :

$$C_{l,m}^{l',m'}(f) = \sum_{l''=0}^{L} \sum_{m''=-l}^{l''} c_{l,m,l'',m''}^{l',m'} \, G_{l'',m''}(f)$$

Dans la relation précédente, $l$ et $m$ désignent respectivement l'ordre et le terme des coefficients de la représentation initiale, $l'$, $m'$ désignent l'ordre et le terme des coefficients de la représentation modifiée et $l''$, $m''$ désignent l'ordre et le terme des coefficients de la fonction de directivité.

Dans le cas où le traitement est un traitement de type fenêtrage, les constantes $c_{l,m,l'',m''}^{l',m'}$ sont déterminés par les relations :

$$c_{l,m,l'',m''}^{l',m'} = \begin{cases} \frac{1}{\sqrt{2}} \left( c_{l,m,l'',m''}^{l',m'\,(1)} + c_{l,-m,l'',m''}^{l',m'\,(1)} \right) & \text{pour } m > 0 \\ c_{l,0,l'',m''}^{l',m'\,(1)} & \text{pour } m = 0 \\ \frac{j}{\sqrt{2}} \left( c_{l,-m,l'',m''}^{l',m'\,(1)} - c_{l,m,l'',m''}^{l',m'\,(1)} \right) & \text{pour } m < 0 \end{cases}$$

avec

$$c_{l,m,l'',m''}^{l',m'\,(1)} = \begin{cases} \frac{1}{\sqrt{2}} \left( c_{l,m,l'',m''}^{l',m'\,(2)} + c_{l,m,l'',-m''}^{l',m'\,(2)} \right) & \text{pour } m'' > 0 \\ c_{l,m,l'',0}^{l',m'\,(2)} & \text{pour } m'' = 0 \\ \frac{j}{\sqrt{2}} \left( c_{l,m,l'',-m''}^{l',m'\,(2)} - c_{l,m,l'',m''}^{l',m'\,(2)} \right) & \text{pour } m'' < 0 \end{cases}$$

avec

$$c_{l,m,l'',m''}^{l',m'\,(2)} = \begin{cases} \frac{1}{\sqrt{2}} \left( c_{l,m,l'',m''}^{l',m'\,(3)} + c_{l,m,l'',m''}^{l',-m'\,(3)} \right) & \text{pour } m' > 0 \\ c_{l,m,l'',m''}^{l',0\,(3)} & \text{pour } m' = 0 \\ \frac{1}{j\sqrt{2}} \left( c_{l,m,l'',m''}^{l',-m'\,(3)} - c_{l,m,l'',m''}^{l',m'\,(3)} \right) & \text{pour } m' < 0 \end{cases}$$

avec

$$c_{l,m,l'',m''}^{l',m'\,(3)} = \delta_{m''}^{m'-m} \frac{1}{2\sqrt{\pi}} \frac{\sqrt{(2l+1)(2l'+1)(2l''+1)}}{l+l'+l''+1} \sqrt{\frac{C_{l+|m|}^{l}\,C_{l'+|m'|}^{l'}\,C_{l''+|m''|}^{l''}}{C_l^{|m|}\,C_{l'}^{|m'|}\,C_{l''}^{|m''|}}} \times$$

$$\sum_{k=|m|}^{l} \sum_{k'=|m'|}^{l'} \sum_{k''=|m''|}^{l''} (-1)^{k+k'+k''} \frac{C_l^k\,C_l^{k-|m|}\,C_{l'}^{k'}\,C_{l'}^{k'-|m'|}\,C_{l''}^{k''}\,C_{l''}^{k''-|m''|}}{C_{l+l'+l''}^{k+k'+k''-n}}$$

et

8

$$\delta_x^y = \begin{cases} 1 & \text{pour } x = y \\ 0 & \text{pour } x \neq y \end{cases}$$

et

$$n = \frac{|m| + |m'| + |m''|}{2}$$

et

$$C_n^p = \frac{n!}{p!\,(n-p)!}$$

Ce traitement correspond à l'application d'un fenêtrage spatial avec filtrage temporel. En effet, les coefficients d'harmoniques sphériques $G_{l,m}(f)$ correspondent à la fonction de directivité $G(\theta,\phi,f)$. De même, les coefficients de Fourier-Bessel $P^{(l)}{}_{l,m}(f)$ du champ acoustique initial correspondent à des coefficients d'harmoniques sphériques d'une fonction de directivité $P^{(l)}(\theta,\phi,f)$. Ainsi, le fenêtrage spatial avec filtrage temporel se traduit, pour chaque fréquence $f$ par un fenêtrage de la fonction de directivité $P^{(l)}(\theta,\phi,f)$ par la fonction de directivité $G(\theta,\phi,f)$, ce qui correspond à une multiplication pour chaque direction $(\theta,\phi)$ de la valeur de ces deux fonctions de directivité, les valeurs de ces deux fonctions de directivité pouvant être complexes.

Ainsi que cela a été décrit précédemment, ce traitement appliqué au champ acoustique a pour effet de modifier l'amplitude, l'éloignement et le spectre de tout ou partie de l'ensemble des sources virtuelles dont on considère qu'elles génèrent le champ acoustique.

La fonction de directivité $G(\theta,\phi,f)$ peut être indépendante de la fréquence et est alors noté $G(\theta,\phi)$. Le traitement est alors uniquement spatial et correspond, pour chaque fréquence $f$, à la multiplication de la fonction de directivité $P^l(\theta,\phi,f)$ par la fonction de directivité $G(\theta,\phi)$.

Dans le cas où le traitement est un traitement de type convolution, les constantes $c_{l,m,l'',m''}^{l',m'}$ sont déterminées par la relation :

$$c_{l,m,l'',m''}^{l',m'} = \begin{cases} \frac{1}{\sqrt{2}}\left(c_{l,m,l'',m''}^{l',m'\,(1)} + c_{l,-m,l'',m''}^{l',m'\,(1)}\right) & \text{pour } m > 0 \\ c_{l,0,l'',m''}^{l',m'\,(1)} & \text{pour } m = 0 \\ \frac{j}{\sqrt{2}}\left(c_{l,-m,l'',m''}^{l',m'\,(1)} - c_{l,m,l'',m''}^{l',m'\,(1)}\right) & \text{pour } m < 0 \end{cases}$$

avec

$$c_{l,m,l'',m''}^{l',m'\,(1)} = \begin{cases} \frac{1}{\sqrt{2}}\left(c_{l,m,l'',m''}^{l',m'\,(2)} + c_{l,m,l'',-m''}^{l',m'\,(2)}\right) & \text{pour } m'' > 0 \\ c_{l,m,l'',0}^{l',m'\,(2)} & \text{pour } m'' = 0 \\ \frac{j}{\sqrt{2}}\left(c_{l,m,l'',-m''}^{l',m'\,(2)} - c_{l,m,l'',m''}^{l',m'\,(2)}\right) & \text{pour } m'' < 0 \end{cases}$$

avec

$$c^{l',m'\,(2)}_{l,m,l'',m''} = \begin{cases} \frac{1}{\sqrt{2}} \left( c^{l',m'\,(3)}_{l,m,l'',m''} + c^{l',-m'\,(3)}_{l,m,l'',m''} \right) & \text{pour } m' > 0 \\[2mm] c^{l',0\,(3)}_{l,m,l'',m''} & \text{pour } m' = 0 \\[2mm] \frac{1}{j\sqrt{2}} \left( c^{l',-m'\,(3)}_{l,m,l'',m''} - c^{l',m'\,(3)}_{l,m,l'',m''} \right) & \text{pour } m' < 0 \end{cases}$$

avec

$$c^{l',m'\,(3)}_{l,m,l'',m''} = \delta^l_{l''}\, \delta^{m'-m}_{m''}\, 2\sqrt{\pi}\, \varepsilon^{m'}_{m'}\, \varepsilon^{m''}_{m''}\, \frac{\sqrt{2l+1}}{l'+l+1} \sqrt{\frac{C^l_{l+|m|}\, C^{l'}_{l'+|m'|}\, C^{|m''|}_{l'}}{C^{|m|}_l\, C^{|m'|}_{l'}\, C^{l'}_{l'+|m''|}}} \sum_{k=|m|}^{l} C^k_l\, C^{k-|m|}_l \times$$

$$\sum_{p=\max(0,-m)}^{\min(l'-m',\,l'+m'')} (-1)^{p+k+m}\, C^p_{l'+m''}\, C^{p+m}_{l'-m''} \times \begin{cases} 1/C^{p+k}_{l'+l} & \text{si } m \geq 0 \\[2mm] 1/C^{p+k+m}_{l'+l} & \text{si } m \leq 0 \end{cases}$$

.

et

$$\varepsilon^m_m = \left( \text{signe}(m) \right)^m$$

Ce traitement correspond à l'application d'un filtrage spatial avec filtrage temporel.

En effet, les coefficients d'harmoniques sphériques $G_{l,m}(f)$ correspondent à des coefficients de Fourier-Bessel d'un champ acoustique produit par un système acoustique linéaire et invariant angulairement, en réponse à une excitation par un champ acoustique de référence tel qu'une onde plane impulsionnelle provenant de la direction (0,0). Une telle réponse est désignée par l'expression réponse spatio-temporelle. Un système acoustique linéaire est invariant angulairement lorsque qu'une rotation du champ qu'il reçoit induit la même rotation sur le champ qu'il génère. Ainsi, les coefficients $G_{l,m}(f)$ correspondent à la réponse spatio-temporelle d'un tel système acoustique.

Les coefficients de Fourier-Bessel $P^{(I)}_{l,m}(f)$ du champ acoustique initial sont également considérés comme des coefficients d'harmoniques sphériques d'une fonction de directivité $P^{(I)}(\theta,\phi,f)$. Ainsi, la convolution spatiale avec filtrage temporel se traduit, pour chaque fréquence $f$, par une convolution spatiale de la fonction de directivité $P^{(I)}(\theta,\phi,f)$ par la fonction de directivité $G(\theta,\phi,f)$ qui est considérée à chaque fréquence $f$ comme un noyau de convolution directif.

Dans le mode de réalisation décrit, la convolution est appliquée en considérant une direction $(\theta_0,\phi_0)$ le noyau de convolution $G(\theta,\phi,f)$ est alors tourné en amenant son pôle nord (direction verticale avec $\theta = 0$ et $\phi = 0$) en $(\theta_0, \phi_0)$. Pour obtenir la valeur du champ acoustique modifié $P^{(T)}(\theta,\phi,f)$ dans la direction $(\theta',\phi')$, la valeur dans la direction $(\theta',\phi')$ du noyau tourné est multipliée avec la valeur de $P^{(I)}(\theta,\phi,f)$ dans la direction $(\theta_0,\phi_0)$ et ces produits sont sommés pour toutes les directions $(\theta_o, \phi_0)$.

Ce traitement appliqué au champ acoustique permet, par exemple, de modifier l'étalement angulaire, soit la précision de localisation spatiale, c'est-à-dire la ponctualité des sources virtuelles, dont on considère qu'elles génèrent le champ acoustique initial, pour chaque fréquence $f$. Ce traitement est l'analogue spatial de la convolution temporelle par une fenêtre, qui a pour effet de modifier l'étalement temporel d'un événement sonore, comme par exemple un effet de moyennage ou de retard.

Dans le cas où la fonction de directivité $G_{l,m}(f)$ est à symétrie cylindrique, c'est-à-dire si $G_{l,m}(f) = 0$ pour m ≠ 0, les équations ci-dessus se simplifient, et les coefficients $c^{l',m'}_{l,m,l'',m''}$ sont alors déterminés par la relation :

$$c^{l',m'}_{l,m,l'',m''} = \delta^l_{l''}\, \delta^l_{l'}\, \delta^m_{m'}\, \delta^0_{m''}\, \sqrt{\frac{4\pi}{2l+1}}$$

La fonction de directivité $G(\theta,\phi,f)$ peut être indépendante de la fréquence et est alors noté $G(\theta,\phi)$. Le traitement

est alors uniquement spatial et correspond, pour chaque fréquence *f*, à la convolution de la fonction de directivité $P^{(l)}(\theta,\phi,f)$ associée au champ initial par la fonction de directivité $G(\theta,\phi)$

Par ailleurs, le procédé de l'invention permet également la réalisation de traitements de rotation. Dans ce cas cependant, il n'est pas fait usage de fonctions de directivité et le procédé requiert des paramètres $(\theta,\phi,\psi)$, représentatifs d'une rotation du champ acoustique autour de l'origine O.

Ainsi, si le traitement est une rotation, les combinaisons de filtrage sont déterminées à partir des paramètres $(\theta,\phi,\psi)$ représentatifs de la rotation du champ acoustique selon la relation :

$$C_{l,m}^{l',m'} = \delta_l^{l'}\, D_{m',m}^{l\,R}$$

avec

$$D_{m',m}^{l\,R} = \begin{cases} \Re\left(D_{m',m}^l + D_{-m',m}^l\right) & \text{pour } m' > 0 \text{ et } m > 0 \\[4pt] \sqrt{2}\,\Re\left(D_{m',0}^l\right) & \text{pour } m' > 0 \text{ et } m = 0 \\[4pt] \Im\left(D_{m',m}^l + D_{-m',m}^l\right) & \text{pour } m' > 0 \text{ et } m < 0 \\[4pt] \sqrt{2}\,\Re\left(D_{0,m}^l\right) & \text{pour } m' = 0 \text{ et } m > 0 \\[4pt] D_{0,0}^l & \text{pour } m' = 0 \text{ et } m = 0 \\[4pt] \sqrt{2}\,\Im\left(D_{0,m}^l\right) & \text{pour } m' = 0 \text{ et } m < 0 \\[4pt] \Im\left(D_{-m',m}^l - D_{m',m}^l\right) & \text{pour } m' < 0 \text{ et } m > 0 \\[4pt] -\sqrt{2}\,\Im\left(D_{m',0}^l\right) & \text{pour } m' < 0 \text{ et } m = 0 \\[4pt] \Re\left(D_{m',m}^l - D_{-m',m}^l\right) & \text{pour } m' < 0 \text{ et } m < 0 \end{cases}$$

avec

$$D_{m',m}^l = \varepsilon_m^m\, \varepsilon_{m'}^{m'}\, d_{m',m}^l(\theta)\, e^{-jm'\phi}\, e^{-jm\psi}$$

avec

$$d_{m',m}^l(\theta) = \sqrt{\frac{(l+m')!\,(l-m')!}{(l+m)!\,(l-m)!}}\, \sum_{k=\max(0,m-m')}^{\min(l-m',l+m)} (-1)^k\, C_{l+m}^k\, C_{l-m}^{k+m'-m} \times$$

$$\left(\cos\frac{\theta}{2}\right)^{2l+m-m'-2k} \left(\sin\frac{\theta}{2}\right)^{2k+m'-m}$$

et

$$\Re(x) = \text{partie réelle}\,(x)$$

et

$$\Im(x) = \text{partie imaginaire}\,(x)$$

Dans cette relation la convention utilisée pour les angles $\theta, \phi$ et $\psi$, consiste à effectuer une rotation d'un angle $\psi$ autour de l'axe (OZ) puis d'un angle $\theta$ autour de l'axe (OY) puis d'un angle $\phi$ autour de l'axe (OZ).

Enfin, le traitement effectué peut également correspondre à un traite- ment neutre. Dans ce cas, les combinaisons de filtrage sont toutes nulles, sauf pour les valeurs où $l' = l$ et $m' = m$ où elles valent 1.

Bien entendu, d'autres traitements ainsi que des combinaisons de traitements décrits peuvent être réalisés grâce à la définition de l'ensemble de constantes $c_{l,m,l'',m''}^{l',m'}$ de pondération.

Par exemple, un traitement aléatoire peut être réalisé par la définition aléatoire de l'ensemble de constantes.

Avantageusement, la sous-étape 30 de calcul est conduite uniquement pour les constantes $c_{l,m,l'',m''}^{l',m'}$ non nulles.

Les combinaisons de filtrage $c_{l,m}^{l',m'}(f)$ ainsi obtenues sont placées dans une matrice $C$ de taille $(L'+1)^2$ sur $(L+1)^2$.

Dans le cas où le traitement à appliquer consiste uniquement en une rotation, une convolution, ou un filtrage, la matrice $C$ correspond directement aux combinaisons de filtrage à appliquer et est notée de manière générale $F$ de sorte que les résultats de la sous-étape 30 de calcul forment les combinaisons de filtrage destinées à être appliquées aux coefficients de la représentation initiale.

Dans le cas où le traitement correspond à une combinaison de traitements tels que des rotations, filtrages, convolutions et/ou traitements quelconques, la sous-étape 30 est répétée une pluralité de fois et chaque matrice $C$ est successivement mémorisée afin d'être combinée avec les matrices suivantes pour finalement délivrer une matrice $F$ comprenant les coefficients correspondant aux combinaisons de filtrage destinées à être appliquées aux coefficients de la représentation initiale. Ainsi, la matrice $F$ est obtenue par multiplication matricielle des matrices $C$ successives.

Chaque élément $F_{l,m}^{l',m'}(f)$ de la matrice $F$ représente la réponse en fréquence d'un filtre de traitement spatio-temporel.

Différentes formes de filtres et de méthodes de filtrage peuvent être mises en œuvre lors de l'étape 10 d'application des combinaisons de filtrage à la représentation initiale du champ acoustique.

Dans le cas où les filtres sont paramétrés directement avec des réponses en fréquence, les coefficients $F_{l,m}^{l',m'}(f)$ sont directement appliqués. Avantageusement, l'étape 6 de détermination des combinaisons de filtrage comprend une sous-étape 32 de conversion afin de déterminer les paramètres des filtres pour d'autres méthodes de filtrage.

Par exemple, les combinaisons de filtrage $F_{l,m}^{l',m'}(f)$ sont converties en :

- des réponses impulsionnelles finies $F_{l,m}^{l',m'}(t)$ calculées par transformée de Fourier temporelle inverse de $F_{l,m}^{l',m'}(f)$, chaque réponse impulsionnelle $F_{l,m}^{l',m'}(t)$ est échantillonnée puis tronquée à une longueur propre à chaque réponse ; ou

- des coefficients de filtres récursifs à réponses impulsionnelles infinies cal- culées à partir des $F_{l,m}^{l',m'}(f)$ avec des méthodes d'adaptation.

Les combinaisons de filtrage ainsi définies sont appliquées lors de l'étape 10 d'application des combinaisons de filtrage laquelle transforme la représentation initiale $P^{(I)}{}_{l,m}(f)$ en une représentation modifiée notée $P^{(T)}{}_{l,m}(f)$ correspondant à un champ acoustique modifié, en lui appliquant les filtres de traitement représentatifs du traitement au moins spatial défini lors de l'étape 2.

Lors de cette étape 10, des coefficients $p^{(T)}{}_{l,m}(t)$ correspondant aux coefficients de la représentation modifiée $P^{(T)}$, sont déduits des coefficients $p^{(I)}{}_{l,m}(t)$ correspondant aux coefficients de la représentation initiale $P^{(I)}$, par l'application des filtres de traitement de réponse en fréquence $F_{l,m}^{l',m'}(f)$ de la façon suivante :

$$P_{l,m}^{(T)}(f) = \sum_{l=0}^{L}\sum_{m=-l}^{l} F_{l,m}^{l',m'}(f)\, P_{l,m}^{(I)}(f)$$

où $P^{(I)}_{l,m}(f)$ est la transformée de Fourier de $p^{(I)}_{l,m}(t)$ et où $P^{(I)}_{l,m}(f)$ est la transformée de Fourier de $p^{(I)}_{l,m}(t)$, coefficients relatifs à la représentation initiale et respectivement à la représentation modifiée.

Ainsi, l'étape 10 met en œuvre les méthodes classiques de filtrage temporel pour l'application des combinaisons de filtrages délivrées par l'étape 2 dans une forme adaptée. Par exemple :

- Le filtrage peut être effectué au moyen de méthodes de filtrage dans le domaine fréquentiel, comme par exemple des techniques de convolution par bloc. Dans ce cas les combinaisons de filtrage sont fournies sous la forme des réponses en fréquences $F^{l',m'}_{l,m}(f)$.

- Le filtrage peut être effectué dans le domaine temporel par convolution temporelle. Dans ce cas, les combinaisons de filtrage sont fournies sous la forme des réponses impulsionnelles $f^{l',m'}_{l,m}(t)$.

- Le filtrage peut être réalisé dans le domaine temporel au moyen de filtres récursifs à réponse impulsionnelle infinie. Dans ce cas, les combinaisons de filtrage sont fournies sous la forme des coefficients des relations de récurrence.

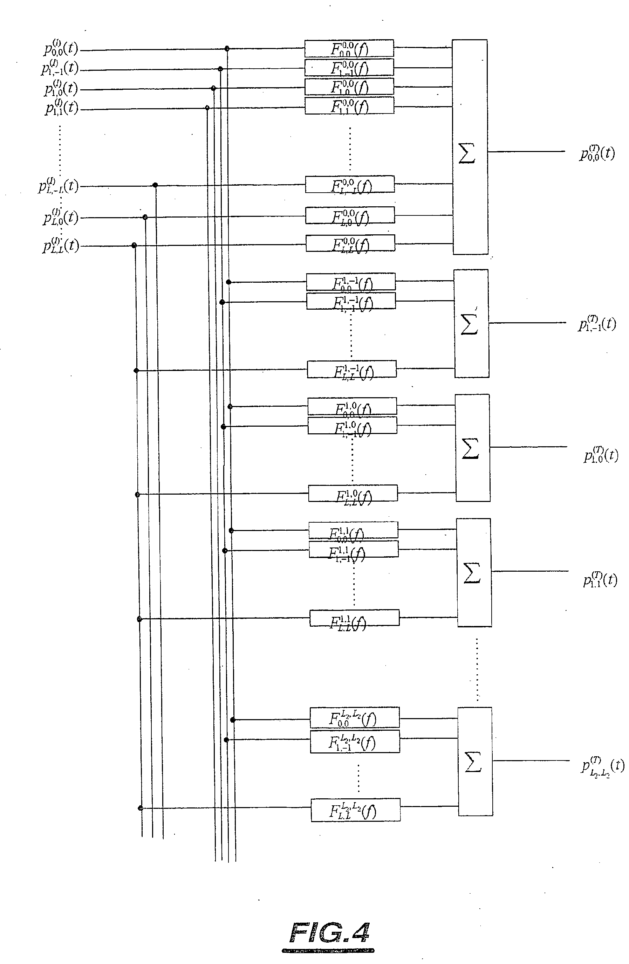

Sur la figure 4, on a décrit le cas d'un filtrage par réponse impulsionnelle finie. Ce filtrage requiert initialement la détermination d'une variable $T^{l',m'}_{l,m}$ correspondant au nombre d'échantillons propres à chaque réponse $f^{l',m'}_{l,m}(t)$, ce qui conduit à l'expression de convolution temporelle suivante :

$$p^{(T)}_{l',m'}[t] = \sum_{l=0}^{L} \sum_{m=-l}^{l} \sum_{\tau=0}^{T^{l',m'}_{l,m}-1} f^{l',m'}_{l,m}[\tau]\, p^{(I)}_{l,m}[t-\tau]$$

Ces coefficients $p^{(T)}_{l,m}(t)$ sont représentatifs d'un champ acoustique correspondant au champ acoustique initial après l'application du traitement au moins spatial qui associe à un champ acoustique produit par au moins une source, un autre champ acoustique produit par au moins une source dont la direction, l'éloignement et/ou le gain sont ainsi modifiés.

Dans un autre mode de réalisation, le procédé de l'invention permet en outre l'application de traitements de type distorsion correspondant à une distorsion de parties du champ acoustique par des modifications des caractéristiques d'étalement, de position, d'amplitude de tout ou partie des sources virtuelles génératrices du champ acoustique initial.

Ce traitement de distorsion peut varier avec la fréquence, ce qui permet d'effectuer des modifications d'éloignement et de spectre de tout ou partie de ces sources virtuelles.

Avantageusement, ce traitement peut être combiné à un des traitements tels que décrits en référence à la figure 3.

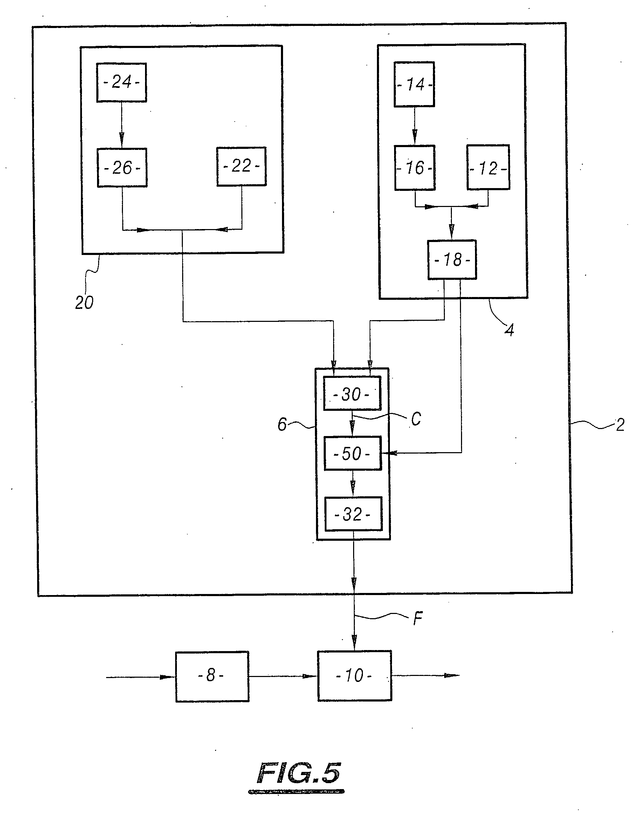

Sur la figure 5, on a décrit l'organigramme du procédé de l'invention dans un tel mode de réalisation combinant un premier traitement appelé traitement nominal, correspondant à un traitement tel que décrit précédemment, avec un traitement de distorsion spatiale qui se traduit par des distorsions de caractéristiques de fréquence, d'amplitude et/ou de phase de composants de la représentation du champ acoustique initial.

Ainsi, dans ce mode de réalisation, l'étape 2 de définition du traitement comprend, de même que précédemment, l'étape 4 d'établissement d'un ensemble de fonctions de directivité comportant la sous-étape 12 de détermination directe et/ou les sous-étapes 14 de saisie et 16 d'interprétation ainsi que la sous-étape 18 de conversion permettant de délivrer un ensemble de fonctions de directivité sous la forme d'un ensemble de coefficients correspondants à la décomposition de ces fonctions sur une base d'harmoniques sphériques.

Dans ce mode de réalisation, une partie de l'ensemble de fonctions de directivité déterminé lors de l'étape 4 correspond à $N$ couples de distorsion représentatifs d'une distorsion à appliquer. De manière similaire au mode de réalisation décrit précédemment, ces couples de distorsion sont décrits sous la forme d'un ensemble de coefficients, notés $\{(H_{l,m,n}(f), H'_{l,m,n}(f))\}$ correspondant à leur décomposition sur une base d'harmoniques sphériques.

Chaque couple de distorsion est constitué de deux fonctions de directivité qui correspondent aux coefficients de Fourier-Bessel d'un champ acoustique source et d'un champ acoustique cible, l'opération de distorsion appliqué au champ acoustique source tendant à le faire ressembler au champ acoustique cible.

Ainsi, l'étape 4 délivre un ensemble de fonctions de directivité correspondant au traitement nominal ainsi qu'à des couples de distorsion représentatifs de la distorsion à appliquer sous la forme d'un ensemble de coefficients correspondant à la décomposition des fonctions de directivité sur une base d'harmoniques sphériques.

De même que précédemment, l'étape 2 comporte également l'étape 20 de détermination de l'ensemble de paramètres du traitement par le biais de la sous-étape 22 de détermination directe et/ou des sous-étapes 24 de saisie et 26 d'interprétation.

Toutefois, dans ce mode de réalisation, l'étape 20 de détermination de paramètres permet en outre la détermination d'un paramètre $\lambda$, pouvant être ajusté entre 0 et 1, spécifiant la ressemblance entre le traitement final à appliquer et le traitement nominal déterminé par l'étape 4, soit encore l'importance relative de la distorsion à effectuer.

Ainsi, si $\lambda$ est égal à 1, seule la distorsion est prise en compte et si $\lambda$ est égal à 0, seul le traitement déterminé lors de l'étape 4 est pris en compte.

De même que dans le mode de réalisation décrit en référence à la figure 3, l'étape 6 de détermination des combinaisons de filtrage comprend la sous-étape 30 de calcul réalisée ainsi que décrit précédemment et permettant de délivrer une matrice $C$ comprenant un ensemble de combinaisons de filtrage correspondant à l'application du traitement nominal tel que défini par l'ensemble de fonctions de directivité déterminé à l'étape 4.

L'ensemble de couples de distorsion est utilisé dans l'étape 6 de détermination des combinaisons de filtrage lors d'une sous-étape 50 de distorsion par modification des combinaisons de filtrage déterminées à l'issue de la sousétape 30 de calcul.

Lors de cette sous-étape 50, les combinaisons de filtrage $C_{l,m}^{l',m'}(f)$ sont modifiées à partir des couples de distorsion notés $\{(H_{l,m,n}(f), H'_{l,m,n}(f))\}$ et du paramètre $\lambda$ afin de fournir en sortie les combinaisons de filtrage $F_{l,m}^{l',m'}(f)$ représentatives du traitement incluant le traitement nominal et la distorsion et destinées à être appliquées aux coefficients de la représentation initiale.

Lors de la sous-étape 50, les coefficients d'harmoniques sphériques $H_{l,m,n}(f)$ représentatifs des $N$ fonctions de directivité sources sont placés dans une matrice $H$ de taille $(L + 1)^2$ sur $N$ de la façon suivante :

$$\begin{bmatrix} H_{0,0,1}(f) & H_{0,0,2}(f) & \cdots\cdots & H_{0,0,N}(f) \\ H_{1,-1,1}(f) & H_{1,-1,2}(f) & \cdots\cdots & H_{1,-1,N}(f) \\ H_{1,0,1}(f) & H_{1,0,2}(f) & \cdots\cdots & H_{1,0,N}(f) \\ H_{1,1,1}(f) & H_{1,1,2}(f) & \cdots\cdots & H_{1,1,N}(f) \\ \vdots & \vdots & & \vdots \\ H_{L,-L,1}(f) & H_{L,-L,2}(f) & \cdots\cdots & H_{L,-L,N}(f) \\ \vdots & \vdots & & \vdots \\ H_{L,0,1}(f) & H_{L,0,2}(f) & \cdots\cdots & H_{L,0,N}(f) \\ \vdots & \vdots & & \vdots \\ H_{L,L,1}(f) & H_{L,L,2}(f) & \cdots\cdots & H_{L,L,N}(f) \end{bmatrix}$$

De même, les coefficients d'harmoniques sphériques $H'_{l,m,n}(f)$ représentatifs des $N$ fonctions de directivité cibles sont placés dans une matrice $H'$ de taille $(L' + 1)^2$ sur $N$ :

$$\begin{bmatrix} H'_{0,0,1}(f) & H'_{0,0,2}(f) & \cdots\cdots & H'_{0,0,N}(f) \\ H'_{1,-1,1}(f) & H'_{1,-1,2}(f) & \cdots\cdots & H'_{1,-1,N}(f) \\ H'_{1,0,1}(f) & H'_{1,0,2}(f) & \cdots\cdots & H'_{1,0,N}(f) \\ H'_{1,1,1}(f) & H'_{1,1,2}(f) & \cdots\cdots & H'_{1,1,N}(f) \\ \vdots & \vdots & & \vdots \\ H'_{L',-L',1}(f) & H'_{L',-L',2}(f) & \cdots\cdots & H'_{L',-L',N}(f) \\ \vdots & \vdots & & \vdots \\ H'_{L',0,1}(f) & H'_{L',0,2}(f) & \cdots\cdots & H'_{L',0,N}(f) \\ \vdots & \vdots & & \vdots \\ H'_{L',L',1}(f) & H'_{L',L',2}(f) & \cdots\cdots & H'_{L',L',N}(f) \end{bmatrix}$$

Les coefficients $C_{l,m}^{l',m'}(f)$ des combinaisons de filtrage du traitement nominal sont également placés dans une matrice C de taille $(L' + 1)^2$ sur $(L + 1)^2$ :

$$
\begin{bmatrix}
C_{0,0}^{0,0}(f) & C_{1,-1}^{0,0}(f) & C_{1,0}^{0,0}(f) & C_{1,1}^{0,0}(f) & \cdots & C_{L,-L}^{0,0}(f) & \cdots & C_{L,0}^{0,0}(f) & \cdots & C_{L,L}^{0,0}(f) \\
C_{0,0}^{1,-1}(f) & C_{1,-1}^{1,-1}(f) & C_{1,0}^{1,-1}(f) & C_{1,1}^{1,-1}(f) & \cdots & C_{L,-L}^{1,-1}(f) & \cdots & C_{L,0}^{1,-1}(f) & \cdots & C_{L,L}^{1,-1}(f) \\
C_{0,0}^{1,0}(f) & C_{1,-1}^{1,0}(f) & C_{1,0}^{1,0}(f) & C_{1,1}^{1,0}(f) & \cdots & C_{L,-L}^{1,0}(f) & \cdots & C_{L,0}^{1,0}(f) & \cdots & C_{L,L}^{1,0}(f) \\
C_{0,0}^{1,1}(f) & C_{1,-1}^{1,1}(f) & C_{1,0}^{1,1}(f) & C_{1,1}^{1,1}(f) & \cdots & C_{L,-L}^{1,1}(f) & \cdots & C_{L,0}^{1,1}(f) & \cdots & C_{L,L}^{1,1}(f) \\
C_{0,0}^{L,-L}(f) & C_{1,-1}^{L,-L}(f) & C_{1,0}^{L,-L}(f) & C_{1,1}^{L,-L}(f) & \cdots & C_{L,-L}^{L,-L}(f) & \cdots & C_{L,0}^{L,-L}(f) & \cdots & C_{L,L}^{L,-L}(f) \\
C_{0,0}^{L,0}(f) & C_{1,-1}^{L,0}(f) & C_{1,0}^{L,0}(f) & C_{1,1}^{L,0}(f) & \cdots & C_{L,-L}^{L,0}(f) & \cdots & C_{L,0}^{L,0}(f) & \cdots & C_{L,L}^{L,0}(f) \\
C_{0,0}^{L,L}(f) & C_{1,-1}^{L,L}(f) & C_{1,0}^{L,L}(f) & C_{1,1}^{L,L}(f) & \cdots & C_{L,-L}^{L,L}(f) & \cdots & C_{L,0}^{L,L}(f) & \cdots & C_{L,L}^{L,L}(f)
\end{bmatrix}
$$

Les combinaisons de filtrage $F_{l,m}^{l',m'}(f)$ représentatives du traitement dans son ensemble sont ensuite déterminées au cours de la sous-étape 50 de distorsion correspondant à une optimisation qui détermine un ensemble de combinaisons de filtrage vérifiant au mieux les couples de distorsion et la ressemblance entre $F_{l,m}^{l',m'}(f)$ et $C_{l,m}^{l',m'}(f)$.

Cette optimisation peut être réalisée au moyen de méthodes telles que des méthodes de descente de gradient ou d'inversion matricielle et permet également de déterminer, sur les sources virtuelles dont on considère qu'elles génèrent le champ acoustique initial, des modifications qui ne sont pas directement spécifiées par les couples de distorsion.

Par exemple, les modifications définies par les couples de distorsion sont interpolées sur les parties voisines des parties directement visées de manière à obtenir les combinaisons de filtrage, ce qui se traduit par des modifications progressives de la représentation initiale du champ acoustique autour des parties directement visées par les couples de distorsion.

Le mode de réalisation décrit utilise une méthode d'inversion matricielle qui conduit à la détermination d'une matrice *F* lors de la sous-étape 50 selon la relation :

$$
F = (\, (1-\lambda)\, C + \lambda\, H'\, H^{T}\, )\, (\, (1-\lambda)\, I + \lambda\, H\, H^{T}\, )^{-1}
$$

où *I* désigne la matrice identité de taille $(L + 1)^2$.

Dans le cas où $\lambda$ vaut 1 et où $N \leq (L + 1)^2$, la matrice *F* est donnée par :

$$
F = C + (\, H' - C\, H\, )\, (\, H^{T}\, H\, )^{-1}\, H^{T}
$$

Dans la matrice **F**, les coefficients $F_{l,m}^{l',m'}(f)$ sont organisés de la manière suivante :

$$
\begin{bmatrix}
F_{0,0}^{0,0}(f) & F_{1,-1}^{0,0}(f) & F_{1,0}^{0,0}(f) & F_{1,1}^{0,0}(f) & \cdots & F_{L,-L}^{0,0}(f) & \cdots & F_{L,0}^{0,0}(f) & \cdots & F_{L,L}^{0,0}(f) \\
F_{0,0}^{1,-1}(f) & F_{1,-1}^{1,-1}(f) & F_{1,0}^{1,-1}(f) & F_{1,1}^{1,-1}(f) & \cdots & F_{L,-L}^{1,-1}(f) & \cdots & F_{L,0}^{1,-1}(f) & \cdots & F_{L,L}^{1,-1}(f) \\
F_{0,0}^{1,0}(f) & F_{1,-1}^{1,0}(f) & F_{1,0}^{1,0}(f) & F_{1,1}^{1,0}(f) & \cdots & F_{L,-L}^{1,0}(f) & \cdots & F_{L,0}^{1,0}(f) & \cdots & F_{L,L}^{1,0}(f) \\
F_{0,0}^{1,1}(f) & F_{1,-1}^{1,1}(f) & F_{1,0}^{1,1}(f) & F_{1,1}^{1,1}(f) & \cdots & F_{L,-L}^{1,1}(f) & \cdots & F_{L,0}^{1,1}(f) & \cdots & F_{L,L}^{1,1}(f) \\
F_{0,0}^{L,-L}(f) & F_{1,-1}^{L,-L}(f) & F_{1,0}^{L,-L}(f) & F_{1,1}^{L,-L}(f) & \cdots & F_{L,-L}^{L,-L}(f) & \cdots & F_{L,0}^{L,-L}(f) & \cdots & F_{L,L}^{L,-L}(f) \\
F_{0,0}^{L,0}(f) & F_{1,-1}^{L,0}(f) & F_{1,0}^{L,0}(f) & F_{1,1}^{L,0}(f) & \cdots & F_{L,-L}^{L,0}(f) & \cdots & F_{L,0}^{L,0}(f) & \cdots & F_{L,L}^{L,0}(f) \\
F_{0,0}^{L,L}(f) & F_{1,-1}^{L,L}(f) & F_{1,0}^{L,L}(f) & F_{1,1}^{L,L}(f) & \cdots & F_{L,-L}^{L,L}(f) & \cdots & F_{L,0}^{L,L}(f) & \cdots & F_{L,L}^{L,L}(f)
\end{bmatrix}
$$

Bien entendu, selon la méthode d'interpolation utilisée, cette étape d'optimisation peut entraîner des variations progressives ou au contraire brutales des modifications entre les parties directement visées par les couples de distorsion et les parties voisines.

Par la suite, les combinaisons de filtrage $F_{l,m}^{l',m'}(f)$ sont éventuellement converties lors de la sous-étape 32 et sont appliquées lors de l'étape 10 ainsi que cela a été décrit en référence aux figures 3 et 4.

Avantageusement, plusieurs distorsions sont appliquées successivement, le procédé comportant alors une pluralité de sous-étapes 50 de distorsion, récursives les unes par rapport aux autres, de sorte que chaque sous-étape 50 reçoit en entrée, comme traitement nominal, les combinaisons de filtrage délivrées par la sous-étape précédente.

Dans le cas où le paramètre $\lambda$ vaut 0, la distorsion n'est pas appliquée et les combinaisons des filtrages déterminées lors de la sous-étape de calcul 30 correspondent directement aux combinaisons de filtrage représentatives du traitement. Ainsi paramétré, ce mode de réalisation correspond au premier mode de réalisation décrit en référence aux figures 3 et 4.

Dans un autre mode de réalisation, seule la distorsion est appliquée et les combinaisons de filtrages sont déterminées uniquement au moyen des couples de distorsion selon la relation :

- Si $N \leq (L + 1)^2$ :

$$F = I + (H' - H)(H^T H)^{-1} H^T$$

- Si $N \geq (L + 1)^2$ :

$$F = H' H^T (H H^T)^{-1}$$

Dans ces équations, les matrices $H$ et $H'$ sont déterminées ainsi que cela a été décrit précédemment. Dans ce cas, la matrice $C$ n'est pas utilisée et la sous-étape 30 n'est pas réalisée. Ainsi, l'étape 2 comporte uniquement la sous-étape 50 de distorsion.

Ce mode de réalisation est une simplification du mode de réalisation décrit lorsque $\lambda$ vaut 1 et que le traitement nominal est le traitement neutre.

Il apparaît donc que le procédé de l'invention permet d'appliquer des traitements quelconques, présentant une très large diversité à la représentation d'un champ acoustique présentant un haut niveau de précision grâce à l'utilisation d'un ensemble de fonctions de directivité représentatif du traitement et représenté sous la forme d'un ensemble de coefficients correspondant à la décomposition de ces fonctions sur une base d'harmoniques sphériques.

Dans le cas où le traitement à appliquer peut se décomposer en une pluralité de traitements élémentaires tels que décrits précédemment, les combinaisons de filtrage du traitement dans son ensemble peuvent être obtenues par multiplication matricielle des matrices correspondant à chacun de la pluralité de traitements, soit encore par arrangement des combinaisons de filtrage délivrées par la sous-étape 30 de calcul et/ou la sous-étape 50 de distorsion.

Ce traitement est ainsi répété une pluralité de fois, les résultats de chaque occurrence étant combinés avec ceux de l'occurrence précédente.

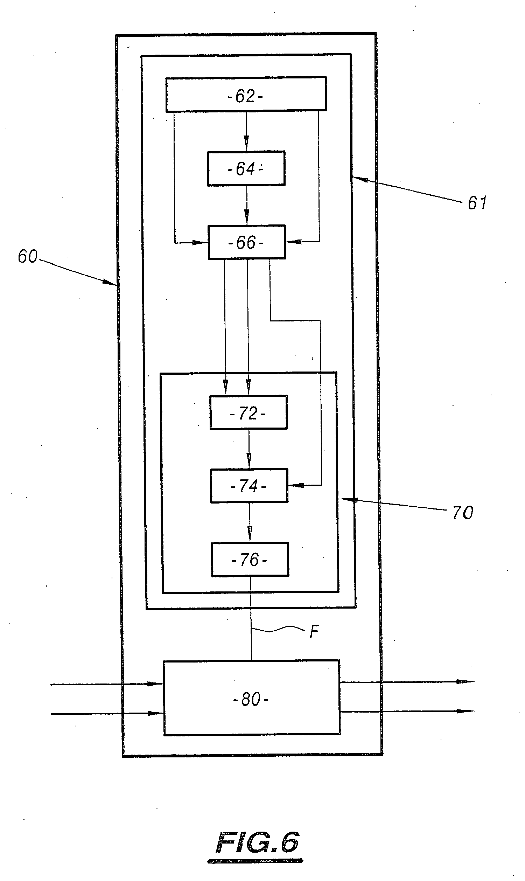

Sur la figure 6, on a représenté un schéma synoptique d'un dispositif adapté pour la mise en œuvre du procédé de l'invention.

Ce dispositif 60 permet d'effectuer un traitement au moins spatial d'une représentation d'un champ acoustique afin de délivrer une représentation modifiée par le traitement au moins spatial.

Le dispositif 60 comporte des moyens 61 de définition du traitement pour la mise en œuvre de l'étape 2 du procédé de l'invention. Ces moyens 61 comportent des moyens d'établissement d'un ensemble de fonctions de directivité représentatif du traitement, sous la forme d'un ensemble de coefficients correspondant à la décomposition de ces fonctions de directivité sur une base d'harmoniques sphériques.

Avantageusement, ils comportent un module 62 de saisie directe, par un opérateur, à partir d'une mémoire ou d'un dispositif extérieur, d'informations de fonctionnement du dispositif 60 permettant notamment la détermination directe de l'ensemble de fonctions de directivité.

Par exemple, ce module 62 de saisie est constitué d'un clavier permettant la saisie directe d'informations ou encore d'une interface avec un dispositif extérieur fournissant directement les informations nécessaires à la mise en œuvre du procédé de l'invention.

Le module 62 peut également être mis en œuvre pour l'entrée d'une consigne de traitement, les moyens 61 comportent alors également un module 64 d'interprétation automatique de cette consigne, afin de délivrer des informations de fonctionnement du dispositif 60 et notamment l'ensemble de fonctions de directivité.

Les informations entrées grâce au module 62 de saisie et/ou 64 d'interprétation, peuvent en outre être de différents formats prédéterminés et le dispositif 60 comporte un module 66 de conversion des informations entre des formats prédéterminés et des formats sélectionnés pour la mise en œuvre du procédé de l'invention.

Notamment, le module 66 permet de convertir ledit ensemble de fonctions de directivité de l'un ou l'autre d'une pluralité de formats en un ensemble de coefficients correspondant à leur décomposition sur une base d'harmoniques sphériques.

Ainsi, les modules 62, 64 et 66 permettent la mise en œuvre des étapes 4 et 20 du procédé de l'invention, de manière à délivrer un ensemble de fonctions de directivité représentatif du traitement sous la forme des coefficients correspondant à la décomposition de ces fonctions sur une base d'harmoniques sphériques.

Dans le cas où le dispositif 60 est utilisé pour la réalisation d'un traitement de distorsion, les modules 62, 64 et 66 délivrent des fonctions de directivité formant des couples de distorsion.

Les modules 62, 64 et 66 permettent également la détermination de tout ou partie d'un ensemble de paramètres nécessaire à la réalisation du procédé de l'invention.

Notamment, ces modules 62, 64 et 66 permettent la définition de tout ou partie des paramètres suivants :

- le paramètre *L* spécifiant l'ordre limite de fonctionnement du procédé et correspondant à la limite mathématique de précision souhaitée ;
- un paramètre *S* définissant la nature du traitement à effectuer ;
- tout ou partie de l'ensemble de constantes notées $c_{l,m,l'',m''}^{l',m'}$ formant des coefficients de pondération et définies en fonction de la nature du traitement ; et
- le paramètre $\lambda$, spécifiant l'importance d'une distorsion à effectuer. Avantageusement, le dispositif 60 comporte une mémoire permettant de stocker tout ou partie de ces paramètres et notamment l'ensemble de constantes. Par exemple, une telle mémoire comporte une pluralité d'ensembles de constantes, chacun correspondant à un traitement, l'ensemble de constantes mis en œuvre étant sélectionné dans cette pluralité en fonction du paramètre *S* représentatif du traitement.

Alternativement, les moyens 61 de définition du traitement comprennent un module de calcul adapté pour déterminer tout ou partie de l'ensemble de constantes en fonction du paramètre *S* représentatif de la nature du traitement.

L'ensemble de ces informations de fonctionnement est introduit dans des moyens 70 de détermination de combinaisons de filtrage, compris dans les moyens 61 de définition du traitement, et adaptés pour la mise en œuvre de l'étape 6 du procédé. Ces moyens 70 comportent un module 72 de calcul par application de combinaisons linéaires permettant la mise en œuvre de la sous-étape 30 de calcul du procédé. Ce module 72 reçoit en entrée l'ensemble de fonctions de directivité afin de délivrer des combinaisons de filtrage par combinaisons linéaires des coefficients correspondants à la décomposition sur une base d'harmoniques sphériques des ensembles de fonctions de directivité représentatives du traitement.

Avantageusement, les constantes délivrées par les modules 62, 64 et 66, forment des coefficients de pondération et sont utilisées comme coefficients des combinaisons linéaires dans le module 72.

Dans le cas où le dispositif 60 met également en œuvre un traitement de distorsion, il comporte également un module 74 de distorsion par modification des combinaisons de filtrage délivrées par le module 72, mettant en œuvre la sous-étape 50 du procédé. Ce module reçoit en entrée les couples de distorsion représentatifs de la distorsion à appliquer, ainsi que le paramètre $\lambda$ représentatif de l'effort de distorsion mis en œuvre ainsi que cela a été décrit précédemment.

Dans le cas où seule une distorsion est appliquée, le module 72 n'intervient pas dans la mise en œuvre du dispositif et uniquement le module 74 de distorsion est nécessaire.

Ainsi, les moyens 70 délivrent un ensemble de coefficients correspondant à des combinaisons de filtrage représentatives du traitement à appliquer.

Eventuellement, ces combinaisons de filtrage sont introduites dans un module 76 de conversion adapté pour délivrer des paramètres de filtres à partir des combinaisons de filtrage en mettant en œuvre la sous-étape 32 du procédé ainsi que cela est décrit précédemment.

Ces paramètres de filtres ou directement les combinaisons de filtrage sont appliqués à des moyens de filtrage 80 qui mettent en œuvre l'étape 10 du procédé et reçoivent en entrée la représentation initiale du champ acoustique sous forme d'un ensemble de coefficients représentatif de ce champ dans le temps et dans les trois dimensions de l'espace pour appliquer les filtres déterminés afin de délivrer une représentation modifiée correspondant au champ acoustique initial modifié par le traitement défini précédemment.

Par exemple, les moyens de filtrage 80 sont des moyens de filtrage numériques appliqués par un processeur de traitement du signal à une représentation numérique du champ acoustique initial.

Dans d'autres modes de réalisation, ces moyens de filtrage sont des moyens de filtrage analogiques à gain commandé, appliqués à une représentation analogique du champ acoustique sous la forme d'un ensemble de signaux correspondant chacun à un coefficient de la représentation initiale du champ acoustique.

Par exemple, le dispositif 60 peut être réalisé sous la forme d'un ordinateur équipé de moyens logiciels de calcul et de moyens matériels d'acquisition et de restitution, de manière à permettre la mise en œuvre des moyens 62 d'entrée d'informations ainsi que l'acquisition de la représentation initiale du champ acoustique et la sortie de la représentation modifiée du champ acoustique, les différents éléments du dispositif 60 étant réalisés par des combinaisons de moyens logiciels et de moyens matériels.

Dans d'autres modes de réalisation, le dispositif 60 correspond à une carte d'acquisition spécifique dédiée uniquement à la réalisation de traitements acoustiques ou encore sous la forme d'un composant programmé pour la mise en œuvre de ces fonctions uniquement.

Avantageusement, le dispositif 60 est intégré dans un système acoustique comprenant des moyens d'acquisition d'un champ acoustique et des moyens de représentation de ce champ acoustique sous la forme d'un ensemble de coefficients dans le temps et dans les trois dimensions de l'espace afin de délivrer la représentation initiale du champ acoustique. Un tel système comporte également un ensemble de restitution commandé par des moyens de pilotage recevant en entrée, la représentation modifiée du champ acoustique et pilotant un ensemble de restitution afin d'obtenir la restitution de ce champ acoustique modifié.

**Revendications**

1. Procédé de détermination de combinaisons de filtrage d'un traitement spatial, les combinaisons de filtrage étant déterminées de la façon suivante :

$$C_{l,m}^{l',m'}(f) = \sum_{l''=0}^{L} \sum_{m''=-l''}^{l''} c_{l,m,l'',m''}^{l',m'} \, G_{l'',m''}(f)$$

où $l$ et $m$ désignent respectivement l'ordre et le terme des coefficients de la représentation initiale, $l'$,$m'$ désignent l'ordre et le terme des coefficients de la représentation modifiée et $l''$,$m''$ désignent l'ordre et le terme des coefficients de la fonction de directivité, les combinaisons de filtrage ($C_{l,m}^{l',m'}$) étant prévues pour être appliquées à une représentation de champ acoustique initiale ($P^{(I)}_{l,m}$) formée par des coefficients représentatifs du champ acoustique initial dans le temps et dans les trois dimensions de l'espace, où des coefficients de Fourier-Bessel $P^{(I)}_{l,m}(f)$ du champ acoustique initial correspondent à des coefficients d'harmoniques sphériques d'une fonction de directivité $P^{(I)}(\theta,\phi,f)$, afin de fournir une représentation de champ acoustique modifiée ($P^{(T)}_{l,m}$) formée par des coefficients représentatifs du champ acoustique modifié dans le temps et dans les trois dimensions de l'espace, où $P^{(T)}_{l,m}(f)$ est une représentation modifiée correspondant à un champ acoustique modifié, en lui appliquant les filtres de traitement représentatifs du traitement au moins spatial défini par l'application des filtres de traitement de réponse en fréquence

$F_{l,m}^{l',m'}(f)$ de la façon suivante :

$$P_{l',m'}^{(T)}(f) = \sum_{l=0}^{L} \sum_{m=-l}^{l} F_{l,m}^{l',m'}(f) \, P_{l,m}^{(I)}(f)$$

où $P^{(I)}_{l,m}(f)$ est la transformée de Fourier de $p^{(I)}_{l,m}(t)$ et où $P^{(T)}_{l,m}(f)$ est la transformée de Fourier de $p^{(T)}_{l,m}(t)$, coefficients relatifs à la représentation initiale et respectivement à la représentation modifiée,
le procédé étant mis en œuvre par un dispositif de détermination et **caractérisé en ce qu'**il comprend :

    - une étape de définition (2) du traitement par un ensemble d'au moins une fonction de directivité, chaque fonction de directivité associant à chaque direction de l'espace une valeur réelle ou complexe,
    - une étape d'établissement (4) de coefficients harmoniques sphériques de chaque fonction de directivité, et
    - une étape de détermination (6) des combinaisons de filtrage à partir des coefficients harmoniques sphériques,

**en ce que** le traitement est défini par une fonction de directivité et une opération prédéterminée prévue pour être appliquée sur :

    - le champ acoustique initial représenté comme une fonction de directivité, et

- la fonction de directivité du traitement,

le procédé comprenant en outre :

- une étape de détermination de coefficients de pondération (c) associés à l'opération prédéterminée, dans laquelle l'étape de détermination (6) des combinaisons de filtrage comprend une étape de détermination (30) de chaque combinaison de filtrage à partir d'une combinaison linéaire des coefficients harmoniques sphériques (G) avec les coefficients de pondération (c), et

**en ce que** les coefficients représentatifs du champ acoustique initial et les coefficients représentatifs du champ acoustique modifié sont des coefficients de Fourier-Bessel, et
**en ce qu'**il comprend en outre une étape de spécification d'un paramètre (L) représentant l'ordre limite des coefficients de Fourier-Bessel.

2. Procédé selon la revendication 1, **caractérisé en ce que** l'opération prédéterminée est la multiplication, pour chaque direction, de la valeur de la fonction de directivité du champ acoustique initial et de la fonction de directivité du traitement.

3. Procédé selon la revendication 2, **caractérisé en ce que** les coefficients de pondération de la multiplication notés $c_{l,m,l',m'}^{l',m'}$ sont donnés par

$$c_{l,m,l'',m''}^{l',m'} = \begin{cases} \frac{1}{\sqrt{2}}\left( c_{l,m,l'',m''}^{l',m'\,(1)} + c_{l,-m,l'',m''}^{l',m'\,(1)} \right) & \text{pour } m > 0 \\ c_{l,0,l'',m''}^{l',m'\,(1)} & \text{pour } m = 0 \\ \frac{j}{\sqrt{2}}\left( c_{l,-m,l'',m''}^{l',m'\,(1)} - c_{l,m,l'',m''}^{l',m'\,(1)} \right) & \text{pour } m < 0 \end{cases}$$

avec

$$c_{l,m,l'',m''}^{l',m'\,(1)} = \begin{cases} \frac{1}{\sqrt{2}}\left( c_{l,m,l'',m''}^{l',m'\,(2)} + c_{l,m,l'',-m''}^{l',m'\,(2)} \right) & \text{pour } m'' > 0 \\ c_{l,m,l'',0}^{l',m'\,(2)} & \text{pour } m'' = 0 \\ \frac{j}{\sqrt{2}}\left( c_{l,m,l'',-m''}^{l',m'\,(2)} - c_{l,m,l'',m''}^{l',m'\,(2)} \right) & \text{pour } m'' < 0 \end{cases}$$

avec

$$c_{l,m,l'',m''}^{l',m'\,(2)} = \begin{cases} \frac{1}{\sqrt{2}}\left( c_{l,m,l'',m''}^{l',m'\,(3)} + c_{l,m,l'',m''}^{l',-m'\,(3)} \right) & \text{pour } m' > 0 \\ c_{l,m,l'',m''}^{l',0\,(3)} & \text{pour } m' = 0 \\ \frac{1}{j\sqrt{2}}\left( c_{l,m,l'',m''}^{l',-m'\,(3)} - c_{l,m,l'',m''}^{l',m'\,(3)} \right) & \text{pour } m' < 0 \end{cases}$$

avec

$$c_{l,m,l'',m''}^{l',m'\,(3)} = \delta_{m''}^{m'-m} \frac{1}{2\sqrt{\pi}} \frac{\sqrt{(2l+1)(2l'+1)(2l''+1)}}{l+l'+l''+1} \sqrt{\frac{C_{l+|m|}^{l}\,C_{l'+|m'|}^{l'}\,C_{l''+|m''|}^{l''}}{C_l^{|m|}\,C_{l'}^{|m'|}\,C_{l''}^{|m''|}}} \times$$

$$\sum_{k=|m|}^{l} \sum_{k'=|m'|}^{l'} \sum_{k''=|m''|}^{l''} (-1)^{k+k'+k''} \frac{C_l^k\,C_l^{k-|m|}\,C_{l'}^{k'}\,C_{l'}^{k'-|m'|}\,C_{l''}^{k''}\,C_{l''}^{k''-|m''|}}{C_{l+l'+l''}^{k+k'+k''-n}}$$

et

$$\delta_x^y = \begin{cases} 1 & \text{pour } x = y \\ 0 & \text{pour } x \neq y \end{cases}$$

et

$$n = \frac{|m| + |m'| + |m''|}{2}$$

et

$$C_n^p = \frac{n!}{p! \, (n-p)!}$$

**4.** Procédé selon la revendication 1, **caractérisé en ce que** l'opération prédéterminée est la convolution, pour chaque direction, de la valeur de la fonction de directivité du champ acoustique initial et de la fonction de directivité du traitement.

**5.** Procédé selon la revendication 4, **caractérisé en ce que** les coefficients de pondération de la convolution notés $c_{l,m,l'',m''}^{l',m'}$ sont donnés par :

$$c_{l,m,l'',m''}^{l',m'} = \begin{cases} \frac{1}{\sqrt{2}} \left( c_{l,m,l'',m''}^{l',m' \, (1)} + c_{l,-m,l'',m''}^{l',m' \, (1)} \right) & \text{pour } m > 0 \\ c_{l,0,l'',m''}^{l',m' \, (1)} & \text{pour } m = 0 \\ \frac{j}{\sqrt{2}} \left( c_{l,-m,l'',m''}^{l',m' \, (1)} - c_{l,m,l'',m''}^{l',m' \, (1)} \right) & \text{pour } m < 0 \end{cases}$$

avec

$$c_{l,m,l'',m''}^{l',m' \, (1)} = \begin{cases} \frac{1}{\sqrt{2}} \left( c_{l,m,l'',m''}^{l',m' \, (2)} + c_{l,m,l'',-m''}^{l',m' \, (2)} \right) & \text{pour } m'' > 0 \\ c_{l,m,l'',0}^{l',m' \, (2)} & \text{pour } m'' = 0 \\ \frac{j}{\sqrt{2}} \left( c_{l,m,l'',-m''}^{l',m' \, (2)} - c_{l,m,l'',m''}^{l',m' \, (2)} \right) & \text{pour } m'' < 0 \end{cases}$$

avec

$$c_{l,m,l'',m''}^{l',m' \, (2)} = \begin{cases} \frac{1}{\sqrt{2}} \left( c_{l,m,l'',m''}^{l',m' \, (3)} + c_{l,m,l'',m''}^{l',-m' \, (3)} \right) & \text{pour } m' > 0 \\ c_{l,m,l'',m''}^{l',0 \, (3)} & \text{pour } m' = 0 \\ \frac{1}{j\sqrt{2}} \left( c_{l,m,l'',m''}^{l',-m' \, (3)} - c_{l,m,l'',m''}^{l',m' \, (3)} \right) & \text{pour } m' < 0 \end{cases}$$

avec

$$c_{l,m,l'',m''}^{l',m'\ (3)} = \delta_{l''}^{l}\ \delta_{m''}^{m'-m}\ 2\sqrt{\pi}\ \varepsilon_{m'}^{m'}\ \varepsilon_{m''}^{m''}\ \frac{\sqrt{2l+1}}{l'+l+1}\ \sqrt{\frac{C_{l+|m|}^{l}\ C_{l'+|m'|}^{l'}\ C_{l'}^{|m''|}}{C_{l}^{|m|}\ C_{l'}^{|m'|}\ C_{l'+|m''|}^{l'}}}\ \sum_{k=|m|}^{l}\ C_{l}^{k}\ C_{l}^{k-|m|}\ \times$$

$$\sum_{p=\max(0,-m)}^{\min(l'-m',l'+m'')} (-1)^{p+k+m}\ C_{l'+m''}^{p}\ C_{l'-m''}^{p+m}\ \times \begin{cases} 1/C_{l'+l}^{p+k} & \text{si }\ m \geq 0 \\ 1/C_{l'+l}^{p+k+m} & \text{si }\ m \leq 0 \end{cases}$$

et

$$\varepsilon_m^m = \big(\text{signe}(m)\big)^m$$

**6.** Procédé selon l'une quelconque des revendications 1 à 5, **caractérisé en ce que** le traitement est une distorsion et **en ce que** l'ensemble d'au moins une fonction de directivité comprend N paires de fonctions de directivité qui forment un ensemble de paires de distorsion représentatives de la distorsion et dans lequel les combinaisons de filtrage sont déterminées à partir des coefficients harmoniques sphériques des N paires de fonctions de directivité.

**7.** Procédé de détermination d'une combinaison de traitements spatiaux à un champ acoustique initial selon l'une quelconque des revendications 1 à 6, **caractérisé en ce qu'**il comprend :

  - une étape de détermination de combinaisons de filtrage globales en combinant les combinaisons de filtrage de chaque traitement, et
  - une étape d'application des combinaisons de filtrage globales à la représentation de champ acoustique initiale.

**8.** Procédé selon la revendication 7, **caractérisé en ce qu'**au moins un traitement est une rotation, le procédé comprenant en outre la détermination des combinaisons de filtrage de la rotation selon les paramètres $(\theta,\phi,\psi)$ représentatifs de la rotation selon :

$$C_{l,m}^{l',m'} = \delta_{l}^{l'}\ D_{m',m}^{l\ R}$$

avec

$$D_{m',m}^{l\ R} = \begin{cases} \Re\big(D_{m',m}^{l} + D_{-m',m}^{l}\big) & \text{pour }\ m' > 0\ \text{et }\ m > 0 \\ \sqrt{2}\,\Re\big(D_{m',0}^{l}\big) & \text{pour }\ m' > 0\ \text{et }\ m = 0 \\ \Im\big(D_{m',m}^{l} + D_{-m',m}^{l}\big) & \text{pour }\ m' > 0\ \text{et }\ m < 0 \\ \sqrt{2}\,\Re\big(D_{0,m}^{l}\big) & \text{pour }\ m' = 0\ \text{et }\ m > 0 \\ D_{0,0}^{l} & \text{pour }\ m' = 0\ \text{et }\ m = 0 \\ \sqrt{2}\,\Im\big(D_{0,m}^{l}\big) & \text{pour }\ m' = 0\ \text{et }\ m < 0 \\ \Im\big(D_{-m',m}^{l} - D_{m',m}^{l}\big) & \text{pour }\ m' < 0\ \text{et }\ m > 0 \\ -\sqrt{2}\,\Im\big(D_{m',0}^{l}\big) & \text{pour }\ m' < 0\ \text{et }\ m = 0 \\ \Re\big(D_{m',m}^{l} - D_{-m',m}^{l}\big) & \text{pour }\ m' < 0\ \text{et }\ m < 0 \end{cases}$$

avec

$$D_{m',m}^{l} = \varepsilon_m^m\ \varepsilon_{m'}^{m'}\ d_{m',m}^{l}(\theta)\ e^{-jm'\phi}\ e^{-jm\psi}$$

avec

$$d^l_{m',m}(\theta) = \sqrt{\frac{(l+m')!\,(l-m')!}{(l+m)!\,(l-m)!}} \sum_{k=\max(0,m-m')}^{\min(l-m',l+m)} (-1)^k \, C^k_{l+m} \, C^{k+m'-m}_{l-m} \times$$

$$\left(\cos\frac{\theta}{2}\right)^{2l+m-m'-2k} \left(\sin\frac{\theta}{2}\right)^{2k+m'-m}$$

et

$$\Re(x) = \text{partie réelle}\,(x)$$

et

$$\Im(x) = \text{partie imaginaire}\,(x)$$

9. Dispositif de détermination de combinaisons de filtrage d'un traitement spatial, **caractérisé en ce qu'**il comprend des moyens pour effectuer chacune des étapes du procédé selon l'une quelconque des revendications 1 à 8.

**Patentansprüche**

1. Verfahren zur Bestimmung von Filterkombinationen einer räumlichen Verarbeitung, wobei die Filterkombinationen wie folgt bestimmt werden:

$$C^{l',m'}_{l,m}(f) = \sum_{l''=0}^{L} \sum_{m''=-l''}^{l''} c^{l',m'}_{l,m,l'',m''} \, G_{l'',m''}(f)$$

wobei I und m jeweils die Ordnung bzw. den Term der Koeffizienten der anfänglichen Darstellung darstellen, I', m' die Ordnung bzw. den term der Koeffizienten der modifizierten Darstellung darstellen und I" , m" die Ordnung bzw. den Term der Koeffizienten der Richtwirkungsfunktion darstellen, wobei die Filterkombinationen $\left(C^{l',m'}_{l,m}\right)$ dazu vorgesehen sind, um auf eine anfängliche Schallfelddarstellung ($P^{(I)}_{l,m}$ angewendet zu werden, die aus Koeffizienten, die das anfängliche Schallfeld in der Zeit und in den drei räumlichen Dimensionen darstellen, oder aus Fourier-Bessel-koeffizenten $P^{(I)}_{l,m}(f)$ des anfänglichen Schallfelds, die Kugelflächenfunktionen einer Richtwirkungsfunktion $P^{(I)}(\theta,\phi,f)$ entsprechen, besteht, um eine modifizierte Schallfelddarstellung ($P^{(T)}_{l,m}$) bereitszustelle, die aus Koeffizenten besteht, die das in der Zeit und in den drei räumlichen Dimensionen modifizierte Schallfeld darstellen, wobei $P^{(T)}_{l,m}(f)$ eine modifizierte Darstellung ist, die einem Schallfeld entspricht, das dadurch modifiziert wurde, dass Behandlungsfilter, die die durch die Anwendung von Frequenzgang-Verarbeitungsfiltern $F^{l',m'}_{l,m}(f)$ definierte mindestens räumliche Verarbeitung wie folgt darauf angewendet werden:

$$P^{(T)}_{l',m'}(f) = \sum_{l=0}^{L} \sum_{m=-l}^{l} F^{l',m'}_{l,m}(f) \, P^{(I)}_{l,m}(f)$$

wobei $P^{(I)}_{l,m}(f)$ die Fourier-Transformierte von $p^{(I)}_{l,m}(t)$ und $P^{(T)}_{l,m}(f)$ die Fourier-Transformierte von $p^{(T)}_{l,m}(t)$ ist, Koeffizienten, die sich auf die anfängliche Darstellung bzw. auf die modifizierte Darstellung beziehen, wobei das Verfahren durch eine Bestimmungsvorrichtung ausgeführt wird und **dadurch gekennzeichnet ist, dass** es umfasst:

- Definieren (2) der Verarbeitung durch eine Gruppe von mindestens einer Richtwirkungsfunktion, wobei jede Richtwirkungsfunktion jeder räumlichen Richtung einen reellen oder komplexen Wert zuordnet,
- Festlegen (4) von Kugelflächenfunktionen jeder Richtwirkungsfunktion und
- Bestimmen (6) der Filterkombinationen anhand der Kugelflächenkoeffizienten, dass die Behandlung definiert ist durch eine Richtwirkungsfunktion und eine vorgegebene Operation, die zur Anwendung auf folgende Gegenstände bestimmt ist:
- das als Richtwirkungsfunktion dargestellte anfängliche Schallfeld und
- die Richtwirkungsfunktion der Verarbeitung, wobei das Verfahren ferner umfasst:
- Bestimmen von Gewichtungskoeffizienten (c), die mit der vorgegebenen Operation zusammenhängen, wobei das Bestimmen (6) von Filterkombinationen den Schritt umfasst: Bestimmen (30) jeder Filterkombination anhand einer linearen Kombination der Kugelflächenkoeffizienten (G) mit den Gewichtungskoeffizienten (c) und

dass die Koeffizienten, die das anfängliche Schallfeld darstellen, und die Koeffizienten, die das modifizierte Schallfeld darstellen, Fourier-Bessel-Koeffizienten sind und

dass es ferner umfasst: Vorgeben eines Parameters (L), der die Limesordnung der Fourier-Bessel-Koeffizienten darstellt.

2. Verfahren nach Anspruch 1, **dadurch gekennzeichnet, dass** die vorgegebene Operation die Multiplikation des Wertes der Richtwirkungsfunktion des anfänglichen Schallfelds und der Richtwirkungsfunktion der Verarbeitung für jede Richtung ist.

3. Verfahren nach Anspruch 2, **dadurch gekennzeichnet, dass** die Gewichtungskoeffizienten der Multiplikation, die als ausgedrückt werden, sich aus folgenden Gleichungen ergeben:

$$c_{l,m,l'',m''}^{l',m'} = \begin{cases} \frac{1}{\sqrt{2}} \left( c_{l,m,l'',m''}^{l',m'\,(1)} + c_{l,-m,l'',m''}^{l',m'\,(1)} \right) & \text{für } m > 0 \\ c_{l,0,l'',m''}^{l',m'\,(1)} & \text{für } m = 0 \\ \frac{j}{\sqrt{2}} \left( c_{l,-m,l'',m''}^{l',m'\,(1)} - c_{l,m,l'',m''}^{l',m'\,(1)} \right) & \text{für } m < 0 \end{cases}$$

wobei

$$c_{l,m,l'',m''}^{l',m'\,(1)} = \begin{cases} \frac{1}{\sqrt{2}} \left( c_{l,m,l'',m''}^{l',m'\,(2)} + c_{l,m,l'',-m''}^{l',m'\,(2)} \right) & \text{für } m'' > 0 \\ c_{l,m,l'',0}^{l',m'\,(2)} & \text{für } m'' = 0 \\ \frac{j}{\sqrt{2}} \left( c_{l,m,l'',-m''}^{l',m'\,(2)} - c_{l,m,l'',m''}^{l',m'\,(2)} \right) & \text{für } m'' < 0 \end{cases}$$

wobei

$$c_{l,m,l'',m''}^{l',m'\,(2)} = \begin{cases} \frac{1}{\sqrt{2}} \left( c_{l,m,l'',m''}^{l',m'\,(3)} + c_{l,m,l'',m''}^{l',-m'\,(3)} \right) & \text{für } m' > 0 \\ c_{l,m,l'',m''}^{l',0\,(3)} & \text{für } m' = 0 \\ \frac{1}{j\sqrt{2}} \left( c_{l,m,l'',m''}^{l',-m'\,(3)} - c_{l,m,l'',m''}^{l',m'\,(3)} \right) & \text{für } m' < 0 \end{cases}$$

wobei

$$c_{l,m,l'',m''}^{l',m'\,(3)} = \delta_{m''}^{m'-m}\,\frac{1}{2\sqrt{\pi}}\,\frac{\sqrt{(2l+1)(2l'+1)(2l''+1)}}{l+l'+l''+1}\,\sqrt{\frac{\mathrm{C}_{l+|m|}^{l}\,\mathrm{C}_{l'+|m'|}^{l'}\,\mathrm{C}_{l''+|m''|}^{l''}}{\mathrm{C}_{l}^{|m|}\,\mathrm{C}_{l'}^{|m'|}\,\mathrm{C}_{l''}^{|m''|}}}\;\times$$

$$\sum_{k=|m|}^{l}\sum_{k'=|m'|}^{l'}\sum_{k''=|m''|}^{l''}(-1)^{k+k'+k''}\,\frac{\mathrm{C}_{l}^{k}\,\mathrm{C}_{l}^{k-|m|}\,\mathrm{C}_{l'}^{k'}\,\mathrm{C}_{l'}^{k'-|m'|}\,\mathrm{C}_{l''}^{k''}\,\mathrm{C}_{l''}^{k''-|m''|}}{\mathrm{C}_{l+l'+l''}^{k+k'+k''-n}}$$

und

$$\delta_x^y = \begin{cases} 1 & \text{für } x = y \\ 0 & \text{für } x \neq y \end{cases}$$

und

$$n = \frac{|m| + |m'| + |m''|}{2}$$

und

$$\mathrm{C}_n^p = \frac{n!}{p!\,(n-p)!}$$

**4.** Verfahren nach Anspruch 1, **dadurch gekennzeichnet, dass** die vorgegebene Operation die Faltung des Wertes der Richtwirkungsfunktion des anfänglichen Schallfelds und der Richtwirkungsfunktion der Verarbeitung für jede Richtung ist.

**5.** Verfahren nach Anspruch 4, **dadurch gekennzeichnet, dass** die Gewichtungskoeffizienten der Faltung, die als $c_{l,m,l',m''}^{l',m'}$ ausgedrückt werden, sich aus folgenden Gleichungen ergeben:

$$c_{l,m,l'',m''}^{l',m'} = \begin{cases} \frac{1}{\sqrt{2}}\left(c_{l,m,l'',m''}^{l',m'\,(1)} + c_{l,-m,l'',m''}^{l',m'\,(1)}\right) & \text{für } m > 0 \\ c_{l,0,l'',m''}^{l',m'\,(1)} & \text{für } m = 0 \\ \frac{j}{\sqrt{2}}\left(c_{l,-m,l'',m''}^{l',m'\,(1)} - c_{l,m,l'',m''}^{l',m'\,(1)}\right) & \text{für } m < 0 \end{cases}$$

wobei

$$c_{l,m,l'',m''}^{l',m'\,(1)} = \begin{cases} \frac{1}{\sqrt{2}}\left(c_{l,m,l'',m''}^{l',m'\,(2)} + c_{l,m,l'',-m''}^{l',m'\,(2)}\right) & \text{für } m'' > 0 \\ c_{l,m,l'',0}^{l',m'\,(2)} & \text{für } m'' = 0 \\ \frac{j}{\sqrt{2}}\left(c_{l,m,l'',-m''}^{l',m'\,(2)} - c_{l,m,l'',m''}^{l',m'\,(2)}\right) & \text{für } m'' < 0 \end{cases}$$

wobei

$$c_{l,m,l'',m''}^{l',m'\,(2)} = \begin{cases} \frac{1}{\sqrt{2}}\left(c_{l,m,l'',m''}^{l',m'\,(3)} + c_{l,m,l'',m''}^{l',-m'\,(3)}\right) & \text{für } m' > 0 \\ c_{l,m,l'',m''}^{l',0\,(3)} & \text{für } m' = 0 \\ \frac{1}{j\sqrt{2}}\left(c_{l,m,l'',m''}^{l',-m'\,(3)} - c_{l,m,l'',m''}^{l',m'\,(3)}\right) & \text{für } m' < 0 \end{cases}$$

wobei

$$c_{l,m,l'',m''}^{l',m'\,(3)} = \delta_{l''}^{l}\,\delta_{m''}^{m'-m}\,2\sqrt{\pi}\,\varepsilon_{m'}^{m'}\,\varepsilon_{m''}^{m''}\,\frac{\sqrt{2l+1}}{l'+l+1}\sqrt{\frac{C_{l+|m|}^{l}\,C_{l'+|m'|}^{l'}\,C_{l'}^{|m''|}}{C_{l}^{|m|}\,C_{l'}^{|m'|}\,C_{l'+|m''|}^{l'}}}\sum_{k=|m|}^{l}C_{l}^{k}\,C_{l}^{k-|m|}\times$$

$$\sum_{p=\max(0,-m)}^{\min(l'-m',l'+m'')}(-1)^{p+k+m}\,C_{l'+m''}^{p}\,C_{l'-m''}^{p+m}\times\begin{cases}1/C_{l'+l}^{p+k} & \text{wenn } m \geq 0 \\ 1/C_{l'+l}^{p+k+m} & \text{wenn } m \leq 0\end{cases}$$

und

$$\varepsilon_{m}^{m} = \big(\text{signe}(m)\big)^{m}$$

6. Verfahren nach einem der Ansprüche 1 - 5, **dadurch gekennzeichnet, dass** die Verarbeitung eine Verzerrung ist, und dass die Gruppe aus mindestens einer Richtwirkungsfunktion N Paare von Richtwirkungsfunktionen umfasst, die eine Gruppe von Verzerrungspaaren bilden, die die Verzerrung darstellen, und wobei die Filterkombinationen anhand der Kugelflächenkoeffizienten der N Richtwirkungsfunktionspaare bestimmt werden.

7. Verfahren zur Bestimmung einer Kombination aus räumlichen Verarbeitungen eines anfänglichen Schallfelds nach einem der Ansprüche 1 - 6, **dadurch gekennzeichnet, dass** es umfasst:

   - Bestimmen von globalen Filterkombinationen durch Kombinieren der Filterkombinationen jeder Verarbeitung und
   - Anwenden der global Filterkombinationen auf die anfängliche Schallfelddarstellung.

8. Verfahren nach Anspruch 7, **dadurch gekennzeichnet, dass** mindestens eine Verarbeitung eine Rotation ist, wobei das Verfahren ferner umfasst: Bestimmen der Filterkombinationen der Rotation gemäß den Parametern ($\theta, \varphi, \psi$), die die Rotation darstellen, gemäß:

$$C_{l,m}^{l',m'} = \delta_{l}^{l'}\,D_{m',m}^{l\,R}$$

wobei

$$D_{m',m}^{l\,R} = \begin{cases} \Re\left(D_{m',m}^{l} + D_{-m',m}^{l}\right) & \text{für } m' > 0 \text{ und } m > 0 \\ \sqrt{2}\,\Re\left(D_{m',0}^{l}\right) & \text{für } m' > 0 \text{ und } m = 0 \\ \Im\left(D_{m',m}^{l} + D_{-m',m}^{l}\right) & \text{für } m' > 0 \text{ und } m < 0 \\ \sqrt{2}\,\Re\left(D_{0,m}^{l}\right) & \text{für } m' = 0 \text{ und } m > 0 \\ D_{0,0}^{l} & \text{für } m' = 0 \text{ und } m = 0 \\ \sqrt{2}\,\Im\left(D_{0,m}^{l}\right) & \text{für } m' = 0 \text{ und } m < 0 \\ \Im\left(D_{-m',m}^{l} - D_{m',m}^{l}\right) & \text{für } m' < 0 \text{ und } m > 0 \\ -\sqrt{2}\,\Im\left(D_{m',0}^{l}\right) & \text{für } m' < 0 \text{ und } m = 0 \\ \Re\left(D_{m',m}^{l} - D_{-m',m}^{l}\right) & \text{für } m' < 0 \text{ und } m < 0 \end{cases}$$

wobei

$$D_{m',m}^{l} = \varepsilon_{m}^{m}\,\varepsilon_{m'}^{m'}\,d_{m',m}^{l}(\theta)\,e^{-jm'\phi}\,e^{-jm\psi}$$

wobei

$$d_{m',m}^{l}(\theta) = \sqrt{\frac{(l+m')!\,(l-m')!}{(l+m)!\,(l-m)!}} \sum_{k=\max(0,m-m')}^{\min(l-m',l+m)} (-1)^{k}\,C_{l+m}^{k}\,C_{l-m}^{k+m'-m} \times$$

$$\left(\cos\frac{\theta}{2}\right)^{2l+m-m'-2k} \left(\sin\frac{\theta}{2}\right)^{2k+m'-m}$$

und

$$\Re(x) = \text{reeller Teil (x)}$$

und

$$\Im(x) = \text{imaginärer Teil (x).}$$

**9.** Vorrichtung zur Bestimmung von Filterkombinationen einer räumlichen Verarbeitung, **dadurch gekennzeichnet, dass** sie Mittel zur Ausführung jedes der Schritte des Verfahrens nach einem der Ansprüche 1 - 8 umfasst.

**Claims**

**1.** A filtering determination method for determining filtering combinations of a spatial processing operation, the filtering combinations being determined as follows :

$$C_{l,m}^{l',m'}(f) = \sum_{l''=0}^{L} \sum_{m''=-l''}^{l''} c_{l,m,l'',m''}^{l',m'}\,G_{l'',m''}(f)$$

where I and m respectively denote the order and the term of the coefficients of the initial representation, I', m' denote the order and the term of the coefficients of the modified representation and, I", m" denote the order and the term of the coefficients of the directivity function, the filtering combinations $\left( C_{l,m}^{l',m'} \right)$ being intended to be applied to an initial sound field representation ($P^{(I)}_{l,m}$) formed by coefficients representative of the initial sound field in time and in the three spatial dimensions, where the Fourier-Bessel coefficients $P^{(I)}_{l,m}(f)$ of the initial sound field correspond to the spherical harmonic coefficients of a directivity function $P^{(I)}(\theta,\phi,f)$, in order to provide a modified sound field representation ($P^{(T)}_{l,m}$) formed by coefficients representative of the modified sound field in time and in the three spatial dimensions, where $P^{(T)}_{l,m}(f)$ is a modified representation corresponding to a modified sound field, by applying to it the processing filtres representative of the at least spatial processing operation defined by the application of the frequency response processing filtres $F_{l,m}^{l',m'}(f)$ in the following manner:

$$P^{(T)}_{l,m}(f) = \sum_{l=0}^{L} \sum_{m=-l}^{l} F_{l,m}^{l',m'}(f) \, P^{(I)}_{l,m}(f)$$

where $P^{(I)}_{l,m}(f)$ is the Fourier transform of $P^{(I)}_{l,m}(t)$ and where $P^{(T)}_{l,m}(f)$ is the Fourier transform of $p^{(T)}_{l,m}(t)$, the coefficients relating to the initial representation and respectively to the modified representation,
the method being implemented by a determination device and **characterised in that** it includes :

- a processing definition step of defining (2) the processing operation by a set of at least one directivity function, each directivity function associating with each direction of space a real value or a complex value ;
- a coefficient establishment step (4) for establishing the spherical harmonic coefficients for each directivity function ; and
- a filtering determination step (6) for determining the filtering combinations from the spherical harmonic coefficients ;

**in that** the processing operation is defined by a directivity function and a predetermined operation intended to be applied on :

- the initial sound field represented as a directivity function ; and
- the directivity function of the processing operation ;

the method in addition including :

- a coefficient determination step for determining the weighting coefficients (c) associated with the predetermined operation, in which the step of determining (6) the filtering combinations comprises a step of determining (30) each filtering combination from a linear combination of the spherical harmonic coefficients (G) with the weighting coefficients (c) ; and

**in that** the coefficients representative of the initial sound field and the coefficients representative of the modified sound field are Fourier Bessel coefficients ; and
**in that** it further comprises a parameter specification step of specifying a parameter (L) representing the order limit of the Fourier-Bessel coefficients.

2. A method according to claim 1, **characterised in that** the predetermined operation is the multiplication operation, for each direction, of the value of the directivity function of the initial sound field and the directivity function of the processing operation.

3. A method according to claim 2, **characterised in that** the weighting coefficients of the multiplication operation, denoted $C_{l,m,l'',m''}^{l',m'}$ are given by

$$c_{l,m,l'',m''}^{l',m'} = \begin{cases} \frac{1}{\sqrt{2}} \left( c_{l,m,l'',m''}^{l',m'\,(1)} + c_{l,-m,l'',m''}^{l',m'\,(1)} \right) & \text{for} \quad m > 0 \\ c_{l,0,l'',m''}^{l',m'\,(1)} & \text{for} \quad m = 0 \\ \frac{j}{\sqrt{2}} \left( c_{l,-m,l'',m''}^{l',m'\,(1)} - c_{l,m,l'',m''}^{l',m'\,(1)} \right) & \text{for} \quad m < 0 \end{cases}$$

with

$$c_{l,m,l'',m''}^{l',m'\,(1)} = \begin{cases} \frac{1}{\sqrt{2}} \left( c_{l,m,l'',m''}^{l',m'\,(2)} + c_{l,m,l'',-m''}^{l',m'\,(2)} \right) & \text{for} \quad m'' > 0 \\ c_{l,m,l'',0}^{l',m'\,(2)} & \text{for} \quad m'' = 0 \\ \frac{j}{\sqrt{2}} \left( c_{l,m,l'',-m''}^{l',m'\,(2)} - c_{l,m,l'',m''}^{l',m'\,(2)} \right) & \text{for} \quad m'' < 0 \end{cases}$$

with

$$c_{l,m,l'',m''}^{l',m'\,(2)} = \begin{cases} \frac{1}{\sqrt{2}} \left( c_{l,m,l'',m''}^{l',m'\,(3)} + c_{l,m,l'',m''}^{l',-m'\,(3)} \right) & \text{for} \quad m' > 0 \\ c_{l,m,l'',m''}^{l',0\,(3)} & \text{for} \quad m' = 0 \\ \frac{1}{j\sqrt{2}} \left( c_{l,m,l'',m''}^{l',-m'\,(3)} - c_{l,m,l'',m''}^{l',m'\,(3)} \right) & \text{for} \quad m' < 0 \end{cases}$$

with

$$c_{l,m,l'',m''}^{l',m'\,(3)} = \delta_{m''}^{m'-m} \frac{1}{2\sqrt{\pi}} \frac{\sqrt{(2l+1)(2l'+1)(2l''+1)}}{l+l'+l''+1} \sqrt{\frac{\mathrm{C}_{l+|m|}^{l}\,\mathrm{C}_{l'+|m'|}^{l'}\,\mathrm{C}_{l''+|m''|}^{l''}}{\mathrm{C}_{l}^{|m|}\,\mathrm{C}_{l'}^{|m'|}\,\mathrm{C}_{l''}^{|m''|}}} \times$$

$$\sum_{k=|m|}^{l} \sum_{k'=|m'|}^{l'} \sum_{k''=|m''|}^{l''} (-1)^{k+k'+k''} \frac{\mathrm{C}_{l}^{k}\,\mathrm{C}_{l}^{k-|m|}\,\mathrm{C}_{l'}^{k'}\,\mathrm{C}_{l'}^{k'-|m'|}\,\mathrm{C}_{l''}^{k''}\,\mathrm{C}_{l''}^{k''-|m''|}}{\mathrm{C}_{l+l'+l''}^{k+k'+k''-n}}$$

and

$$\delta_x^y = \begin{cases} 1 & \text{for} \quad x = y \\ 0 & \text{for} \quad x \neq y \end{cases}$$

And

$$n = \frac{|m| + |m'| + |m''|}{2}$$

and

$$\mathrm{C}_n^p = \frac{n!}{p!\,(n-p)!}$$

4. A method according to claim 1, **characterised in that** the predetermined operation is the convolution operation, for each direction, of the value of the directivity function of the initial sound field and of the directivity function of the processing operation.

5. A method according to claim 4, **characterised in that** the weighting coefficients of the convolution operation denoted are given by :

$$
c_{l,m,l'',m''}^{l',m'} = \begin{cases} \frac{1}{\sqrt{2}} \left( c_{l,m,l'',m''}^{l',m'\,(1)} + c_{l,-m,l'',m''}^{l',m'\,(1)} \right) & \text{for} \quad m > 0 \\ c_{l,0,l'',m''}^{l',m'\,(1)} & \text{for} \quad m = 0 \\ \frac{j}{\sqrt{2}} \left( c_{l,-m,l'',m''}^{l',m'\,(1)} - c_{l,m,l'',m''}^{l',m'\,(1)} \right) & \text{for} \quad m < 0 \end{cases}
$$

with

$$
c_{l,m,l'',m''}^{l',m'\,(1)} = \begin{cases} \frac{1}{\sqrt{2}} \left( c_{l,m,l'',m''}^{l',m'\,(2)} + c_{l,m,l'',-m''}^{l',m'\,(2)} \right) & \text{for} \quad m'' > 0 \\ c_{l,m,l'',0}^{l',m'\,(2)} & \text{for} \quad m'' = 0 \\ \frac{j}{\sqrt{2}} \left( c_{l,m,l'',-m''}^{l',m'\,(2)} - c_{l,m,l'',m''}^{l',m'\,(2)} \right) & \text{for} \quad m'' < 0 \end{cases}
$$

with

$$
c_{l,m,l'',m''}^{l',m'\,(2)} = \begin{cases} \frac{1}{\sqrt{2}} \left( c_{l,m,l'',m''}^{l',m'\,(3)} + c_{l,m,l'',m''}^{l',-m'\,(3)} \right) & \text{for} \quad m' > 0 \\ c_{l,m,l'',m''}^{l',0\,(3)} & \text{for} \quad m' = 0 \\ \frac{1}{j\sqrt{2}} \left( c_{l,m,l'',m''}^{l',-m'\,(3)} - c_{l,m,l'',m''}^{l',m'\,(3)} \right) & \text{for} \quad m' < 0 \end{cases}
$$

with

$$
c_{l,m,l'',m''}^{l',m'\,(3)} = \delta_{l''}^{l} \, \delta_{m''}^{m'-m} \, 2\sqrt{\pi} \, \varepsilon_{m'}^{m'} \, \varepsilon_{m''}^{m''} \frac{\sqrt{2l+1}}{l'+l+1} \sqrt{\frac{C_{l+|m|}^{l} \, C_{l'+|m'|}^{l'} \, C_{l'}^{|m''|}}{C_{l}^{|m|} \, C_{l'}^{|m'|} \, C_{l'+|m''|}^{l'}}} \sum_{k=|m|}^{l} C_{l}^{k} \, C_{l}^{k-|m|} \times
$$

$$
\sum_{p=\max(0,-m)}^{\min(l'-m',l'+m'')} (-1)^{p+k+m} \, C_{l'+m''}^{p} \, C_{l'-m''}^{p+m} \times \begin{cases} 1/C_{l'+l}^{p+k} & \text{if} \quad m \geq 0 \\ 1/C_{l'+l}^{p+k+m} & \text{if} \quad m \leq 0 \end{cases}
$$

and

$$
\varepsilon_{m}^{m} = \left( \text{signe}(m) \right)^{m}
$$

6. A method according to any one of claims 1 to 5, **characterised in that** the processing operation is a distortion and **in that** the set of at least one directivity function comprises N pairs of directivity functions which form a set of distortion pairs representative of the distortion, and in which the filtering combinations are determined from the spherical harmonic coefficients of the N pairs of directivity functions.

7. A processing determination method for determining a combination of spatial processing operations with an initial sound field according to any one of claims 1 to 6, **characterised in that** it comprises :

- a filtering determination step for determining overall filtering combinations by combining the filtering combinations of each processing operation ; and
- a filtering application step for applying the overall filtering combinations to the initial sound field representation.

8. A method according to claim 7, **characterised in that** at least one processing operation is a rotation operation, the method further comprising the determination of the filtering combinations of the rotation operation according to the parameters $(\theta, \phi, \psi)$ representative of the rotation, according to :

$$C_{l,m}^{l',m'} = \delta_l^{l'}\, D_{m',m}^{l\,R}$$

with

$$D_{m',m}^{l\,R} = \begin{cases} \Re\left(D_{m',m}^{l} + D_{-m',m}^{l}\right) & \text{for } m' > 0 \text{ and } m > 0 \\[4pt] \sqrt{2}\,\Re\left(D_{m',0}^{l}\right) & \text{for } m' > 0 \text{ and } m = 0 \\[4pt] \Im\left(D_{m',m}^{l} + D_{-m',m}^{l}\right) & \text{for } m' > 0 \text{ and } m < 0 \\[4pt] \sqrt{2}\,\Re\left(D_{0,m}^{l}\right) & \text{for } m' = 0 \text{ and } m > 0 \\[4pt] D_{0,0}^{l} & \text{for } m' = 0 \text{ and } m = 0 \\[4pt] \sqrt{2}\,\Im\left(D_{0,m}^{l}\right) & \text{for } m' = 0 \text{ and } m < 0 \\[4pt] \Im\left(D_{-m',m}^{l} - D_{m',m}^{l}\right) & \text{for } m' < 0 \text{ and } m > 0 \\[4pt] -\sqrt{2}\,\Im\left(D_{m',0}^{l}\right) & \text{for } m' < 0 \text{ and } m = 0 \\[4pt] \Re\left(D_{m',m}^{l} - D_{-m',m}^{l}\right) & \text{for } m' < 0 \text{ and } m < 0 \end{cases}$$

with

$$D_{m',m}^{l} = \varepsilon_m^{m}\,\varepsilon_{m'}^{m'}\, d_{m',m}^{l}(\theta)\, e^{-jm'\phi}\, e^{-jm\psi}$$

With

$$d_{m',m}^{l}(\theta) = \sqrt{\frac{(l+m')!\,(l-m')!}{(l+m)!\,(l-m)!}} \sum_{k=\max(0,m-m')}^{\min(l-m',l+m)} (-1)^k\, C_{l+m}^{k}\, C_{l-m}^{k+m'-m} \times$$

$$\left(\cos\frac{\theta}{2}\right)^{2l+m-m'-2k} \left(\sin\frac{\theta}{2}\right)^{2k+m'-m}$$

and

$$\Re(x) = \text{real part (x)}$$

and

$$\Im(x) = \text{imaginary part (x)}$$

9. A filtering determination device for determining filtering combinations of a spatial processing operation, **characterised in that** it comprises the means for carrying out each of the steps of the method according to any one of claims 1 to 8.

## FIG.1

_FIG.2_

_FIG.3_

$p_{0,0}^{(I)}(t)$

$p_{1,-1}^{(I)}(t)$

$p_{1,0}^{(I)}(t)$

$p_{1,1}^{(I)}(t)$

$p_{L,-L}^{(I)}(t)$

$p_{L,0}^{(I)}(t)$

$p_{L,L}^{(I)}(t)$

$F_{0,0}^{0,0}(f)$

$F_{1,-1}^{0,0}(f)$

$F_{1,0}^{0,0}(f)$

$F_{1,1}^{0,0}(f)$

$F_{L,-L}^{0,0}(f)$

$F_{L,0}^{0,0}(f)$

$F_{L,L}^{0,0}(f)$

$F_{0,0}^{1,-1}(f)$

$F_{1,-1}^{1,-1}(f)$

$F_{L,L}^{1,-1}(f)$

$F_{0,0}^{1,0}(f)$

$F_{1,-1}^{1,0}(f)$

$F_{L,L}^{1,0}(f)$

$F_{0,0}^{1,1}(f)$

$F_{1,-1}^{1,1}(f)$

$F_{L,L}^{1,1}(f)$

$F_{0,0}^{L_2,L_2}(f)$

$F_{1,-1}^{L_2,L_2}(f)$

$F_{L,L}^{L_2,L_2}(f)$

$\Sigma$

$p_{0,0}^{(T)}(t)$

$p_{1,-1}^{(T)}(t)$

$p_{1,0}^{(T)}(t)$

$p_{1,1}^{(T)}(t)$

$p_{L_2,L_2}^{(T)}(t)$

*FIG.4*

34

FIG.5

FIG.6